(19)

Europäisches
Patentamt
European
Patent Office
Office européen
des brevets

(11)  **EP 1 645 466 B1**

(12)  **EUROPEAN PATENT SPECIFICATION**

(45) Date of publication and mention
of the grant of the patent:
**30.12.2009 Bulletin 2009/53**

(51) Int Cl.:
**B60Q 1/115** (2006.01)    **B62J 6/02** (2006.01)
**B60Q 1/12** (2006.01)    **B60Q 1/18** (2006.01)

(21) Application number: **05021954.2**

(22) Date of filing: **07.10.2005**

(54) **Method for controlling lighting means of a vehicle and vehicle**

Verfahren zur Steuerung eines Fahrzeugsscheinwerfers und dessen mitausgestattenes Fahrzeug

Methode de control d' un projecteur de lumière d'un véhicule et véhicule associé

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.10.2004 JP 2004295385
21.09.2005 JP 2005274753**

(43) Date of publication of application:
**12.04.2006 Bulletin 2006/15**

(73) Proprietor: **Yamaha Hatsudoki Kabushiki Kaisha
Iwata-shi, Shizuoka-ken (JP)**

(72) Inventors:
• **Hannya, Yousei
c/o Yamaha Hatsudoki Kabushiki Kaisha
Iwata-shi
Shizuoka-ken (JP)**
• **Andou, Yusuke
c/o Yamaha Hatsudoki Kabushiki Kaisha
Iwata-shi
Shizuoka-ken (JP)**

• **Uchida, Yoshiaki
c/o Yamaha Hatsudoki Kabushiki Kaisha
Iwata-shi
Shizuoka-ken (JP)**
• **Yamashita, Etsuo
c/o Yamaha Hatsudoki Kabushiki Kaisha
Iwata-shi
Shizuoka-ken (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 447 616    US-A- 4 870 545
US-A- 5 161 875**

• **PATENT ABSTRACTS OF JAPAN vol. 2000, no.
25, 12 April 2001 (2001-04-12) & JP 2001 219881
A (YAMAHA MOTOR CO LTD), 14 August 2001
(2001-08-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a method for controlling lighting means of a vehicle, and in particular to an illumination zone control method of lamps of a motorcycle, and to a vehicle having lighting means, and in particular a motorcycle having lamps. Thus, particularly it refers to an illumination zone control method of the lamps of the motorcycle and the motorcycle lamps that can secure wide visual recognition when cornering in nighttime drive.

Generally, the motorcycle, when cornering or turning at intersections, runs with the vehicle banked to counter centrifugal forces working on the vehicle. At this time, along with the bank of the vehicle, because the headlight also banks in the same direction, the illumination zone of the headlight also banks.

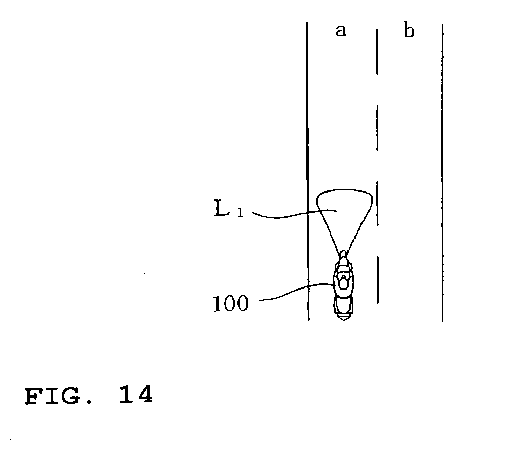

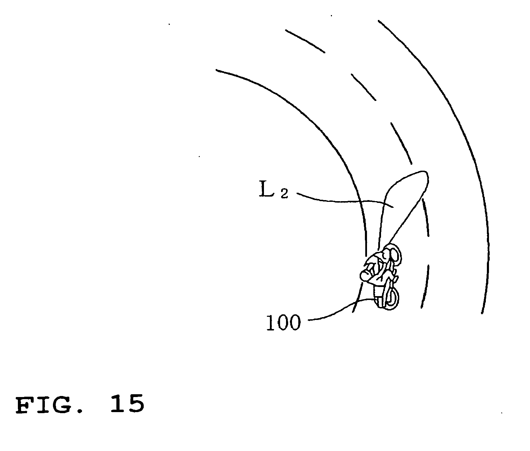

In other words, as shown in Fig. 14, when a motorcycle 100 is driving on a straight road (drive lane (a)), the illumination zone $L_1$ of the headlight expands evenly left and right forward in the advancing direction. However, when driving on a road curving to left as shown in Fig. 15, as the cornering is made with the vehicle banked, the illumination zone $L_2$ of the headlight also slopes left downward. As a result, with respect to the drive lane (a), because a point nearer to the rider is illuminated, the illumination zone on the inner side in the forward advancing direction decreases.

Therefore, to prevent the illumination zone from narrowing due to the vehicle bank when cornering in night drive in JP-A-2001-219881 and JP-A-2001-347977, methods of controlling the illumination angle (active control) have been proposed in which the tilted angle (bank angle) is detected when the vehicle banks, and the lens and lamp of the headlight are turned according to the magnitude of the bank angle.

United States Patent US-A-5,161,875 discloses further a lighting system for vehicle controlled in order to correct the light orientation in response to the inclination of said vehicle, accordingly to the preambles of claims 1 and 21.

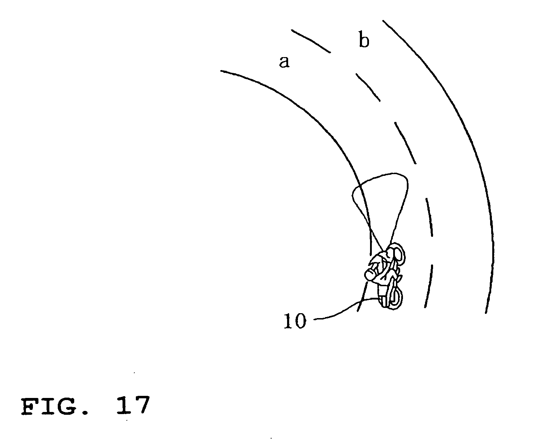

In other words, as shown in Fig. 15(a), the screen light distribution 110 of the headlight is in the state of expanding left and right along the horizontal line H when the motorcycle is driving straight ahead. And, when the motorcycle is driving a left curving road, as shown in Fig. 15(b), the screen light distribution 110 of the headlight is made to slope left upward by turning the headlight by an angle according to the magnitude of the bank angle in the opposite direction of the bank direction of the vehicle. As a result, light distribution of the headlight to the inner side in the advancing direction, the direction of the rider's line of sight, increases. As shown in Fig. 17, also when cornering, it is possible to illuminate evenly the forward advancing direction of the drive lane (a).

However, because of its characteristics, the motorcycle is required to drive while constantly banking the vehicle left and right to balance the vehicle even when driving straight ahead. Therefore, unnecessary light distribution adjustment of the headlight is made every time a vehicle bank is detected, and the illumination zone of forward left and right of the headlight changes frequently in small steps.

Because the motorcycle rider is required of cornering technique while banking the vehicle, the rider must constantly direct his/her line of sight in the forward advancing direction in preparation for entering a corner even when driving straight and must have advance recognition of the drive road circumstances (foresight action).

However, the way of automatically adjusting the light distribution of the headlight by detecting the bank angle of the vehicle cannot control the light distribution of the headlight before cornering.

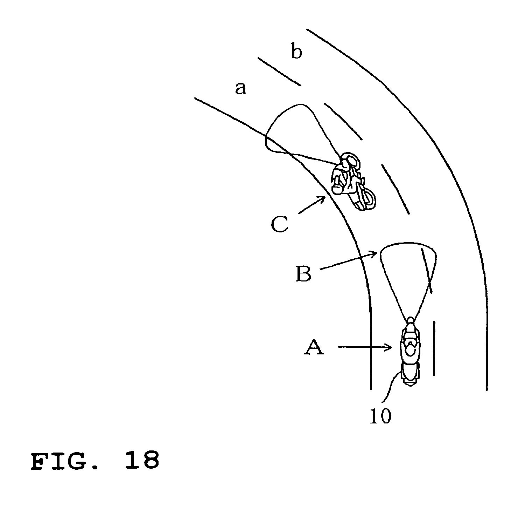

In other words, as shown in Fig. 18, because the vehicle 10 is not banked yet at the point A before entering the corner, the headlight is illuminating ordinary, forward advancing direction. However, already at this time, the rider's line of sight is directed to the point B on the inner side of the drive lane (a) on the forward side of the left curve. However, the illumination zone to that point is narrow. At the point C with the vehicle 10 having entered the corner, because the vehicle is banked, the light distribution of the headlight is automatically adjusted, and the illumination zone to the drive lane (a) on the forward side of the curve is secured. In other words, this method cannot cope with the foresight action for the drive road over a certain distance from the point A before entering the corner till having entered the corner.

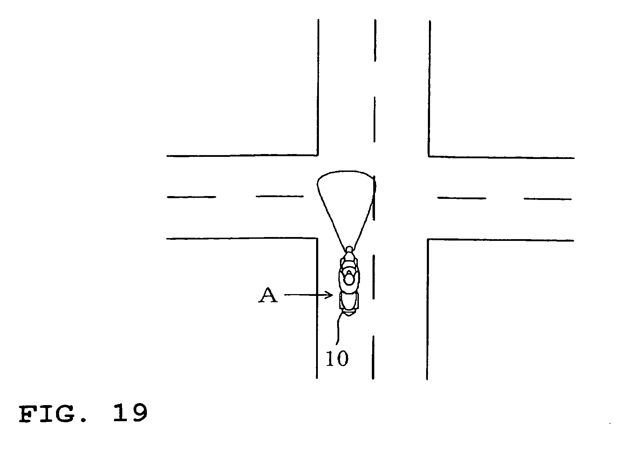

Further, as shown in Fig. 19, when the motorcycle 10 turns at an intersection, the rider aims his/her line of sight for the curving direction before entering the intersection. However, because the vehicle is not banked yet at the point A, the headlight is illuminating the straight advancing direction of the intersection.

This invention has been made in view of the above point. Therefore, an object of this invention is to provide a method as indicated above and a vehicle as indicated above, capable of controlling the illumination zones of the lighting means (the lamps) of the vehicle (the motorcycle), corresponding to the foresight action of the driver (the rider).

This objective is solved in an inventive manner by a method for controlling lighting means of a vehicle, in particular a motorcycle, said lighting means being activated to illuminate a first illumination zone for left and/or right directions ahead of the vehicle before entering a curve and/or before making a turn.

According to a preferred embodiment, the vehicle is a motorcycle, and said lighting means being activated to illuminate a second illumination zone for left and/or right directions ahead of the motorcycle when a bank angle of the motorcycle is found to be at least a set value during driving the curve or during making the turn.

According to a further preferred embodiment, the motorcycle is provided with lamps as the lighting means for illuminating left and right directions in front of the motorcycle, said lamps being controlled to be capable of illuminating a first illumination zone and a second illumination zone for respective left and right directions, wherein the lamps are controlled to illuminate the first illumination zone, from a point before a curve or a turn, for left or right direction when the motorcycle is to enter the curve or the turn, and controlled to illuminate the second illumination zone for left or right direction after the motorcycle entering the curve or the turn, while driving the curve or the turn, in case that the bank angle of the motorcycle becomes a specified value or greater.

Therein, preferably the lamps are constituted with a left and right pair of lamps provided in the front part of the vehicle, and wherein the left and right lamps are each controlled to be capable of illuminating the first illumination zone and the second illumination zone.

Further, preferably the lamps are automatically controlled to illuminate the first illumination zone on the side corresponding to the direction indicated with a turn signal as interlocked with the operation of the turn signal when the motorcycle is to enter a curve or a turn, and are automatically controlled to illuminate the second illumination zone on the same side as the side illuminating the first illumination zone after the motorcycle entering the curve or the turn, while driving the curve or the turn, in case that the bank angle of the motorcycle becomes a specified value or greater.

Still further, preferably the second illumination zones in screen light distribution, when the vehicle is upright, are aimed to be above the first illumination zone.

According to another preferred embodiment, the lamps are constituted with a left and right pair of first lamps and a left and right pair of second lamps provided in the front part of the vehicle, and, when the motorcycle is to enter a curve or a turn, the first lamps are controlled, from a point before the curve or the turn, to automatically light up and illuminate the first illumination zone for left or right direction, and after the motorcycle entering the curve or the turn, while driving the curve or the turn, in case that the bank angle of the motorcycle becomes a specified value or greater, the second lamp is controlled to automatically light up and illuminate the second illumination zone for left or right direction.

Preferably, the lamp is controlled to be capable of illuminating the first and the second illumination zones by controlling a lens or a reflector disposed on a light source of the lamp.

According to still another preferred embodiment, for controlling the illumination zones of the lamps of a motorcycle, when the motorcycle is cornering, the motorcycle is provided with a left and right pair of first lamps and a left and right pair of second lamps in the front part of the vehicle, the illumination zones of the second lamps in screen light distribution, when vehicle is upright, are aimed to be above the illumination zones of the first lamps, and when the motorcycle is to enter a curve or a turn, the first lamp on the side corresponding to the direction indicated with a turn signal lights up automatically as interlocked with the operation of the turn signal, and after the motorcycle entering the curve or turn, while driving the curve or turn, in case that the bank angle of the motorcycle becomes a specified value or greater, the second lamp on the same side as the side on which the first lamp has lit up lights up automatically.

According to yet another preferred embodiment, for controlling the illuminations zone of the lamps of a motorcycle, when the motorcycle is cornering, the motorcycle is provided with a left and right pair of first lamps and a left and right pair of second lamps in the front part of the vehicle, the illumination zones of the second lamps in screen light distribution, when vehicle is upright, are aimed to be above the illumination zones of the first lamps, and when the motorcycle is to enter a curve or turn, the curve or turn is automatically detected from map information, and when the motorcycle reaches a predetermined point before the curve or turn, one of the pair of first lamps lights up automatically, and after the motorcycle entering the curve or turn, while driving the curve or turn, in case that the bank angle of the motorcycle becomes a specified value or greater, the second lamp on the same side as the side on which the first lamp has lit up lights up automatically.

Preferably, in case that the turn is an intersection branching at least in two, left and right directions, the first lamp on the side corresponding to a predetermined left or right direction lights up automatically.

Further, preferably in case of a curve curving to left or right direction, the first lamp on the side corresponding to the curving direction of the curve lights up automatically.

The illumination zones of the second lamps change automatically according to the magnitude of the bank angle and the magnitude of the bank angle may be automatically obtained from the vehicle speed and the yaw rate values obtained by detecting vehicle speed and yaw rate values of the vehicle.

Further, in case that the bank angle of the motorcycle becomes a specified value or smaller, when the motorcycle is driving a curve or turn with the second lamp lit up, the second lamp may go out automatically.

Therein, the specified value of the bank angle for automatically putting out the second lamp may be smaller than the specified value of the bank angle for automatically lighting up the second lamp.

Beneficially, the illuminating direction of the first lamp is set below a horizontal cut line, and the illuminating direction of the second lamp is spot illumination set above the horizontal cut line.

Further, beneficially the left and right pair of second lamps are constituted with two or more plural number of LEDs provided respectively in left and right positions in the front part of the vehicle.

Therein, the plural number of LEDs might be disposed side by side in the vehicle width direction in left and right positions of the front part of the vehicle, and respective LEDs might be preset to light up individually in different angular ranges of the bank angle.

Still further, beneficially the motorcycle is further provided with a headlight in the front central part of the vehicle, and the first and second lamps are adjusted to light up when the headlight is lit up.

The above object is solved in an inventive manner for the apparatus aspect by a vehicle being provided with lighting means being adapted to illuminate a first illumination zone for left and/or right directions ahead of the vehicle, and with a control means controlling the lighting means to be activated before entering a curve or a turn.

According to a preferred embodiment, the vehicle is a motorcycle and the lighting means being adapted to illuminate a second illumination zone for respective left and/or right directions of the motorcycle, when the motorcycle is driving the curve and a bank angle of the motorcycle is found to be at least a set value.

Therein, preferably the vehicle has lamps as lighting means and is provided with a control means that controls the illumination zones of the lamps, wherein the lamps are controlled to be capable of illuminating a first illumination zone and a second illumination zone for respective left and right directions, and wherein the lamps are controlled by the control means, from a point before the curve or the turn, to automatically light up and illuminate the first illumination zone for left and right direction when the motorcycle is to enter a curve or a turn, and controlled to automatically light up and illuminate the second illumination zone for left or right direction after the motorcycle entering the curve or the turn, while driving the curve or the turn, in case that the bank angle of the motorcycle becomes a specified value or greater.

Therein, the second illumination zones in screen light distribution, when the vehicle is upright, might be aimed to be above the first illumination zone.

According to a further preferred embodiment, the vehicle has lamps as lighting means and is provided with a control means that controls the illumination zones of the lamps, wherein the lamps are constituted with a left and right pair of first lamps and a left and right pair of second lamps provided in the front part of the vehicle, the illumination zones of the second lamps in screen light distribution, when the vehicle is upright, are aimed to be above the illumination zones of the first lamps, the left and right pair of first lamps are controlled with the control means to light up automatically the first lamp on the side corresponding to the direction indicated with the turn signal, as interlocked with the operation of a turn signal, and the left and right pair of second lamps are controlled with the control means such that the second lamp on the same side as the side on which the first lamp has lit up is lit up automatically when the bank angle of the motorcycle becomes a specified value or greater with the first lamp lit up.

According to another preferred embodiment, the vehicle has lamps as lighting means and is provided with a control means that controls the illumination zones of the lamps, wherein the lamps are constituted with a left and right pair of first lamps and a left and right pair of second lamps provided in the front part of the vehicle, the illumination zones of the second lamps in screen light distribution, when the vehicle is upright, are aimed to be above the illumination zones of the first lamps, the left and right pair of first lamps are controlled with the control means such that the curve or turn is automatically detected from the map information and one of the left and right pair of first lamps are lit up automatically when the motorcycle reaches a predetermined point before the curve or turn, and the left and right pair of second lamps are controlled with the control means such that the second lamp on the same side as the side on which the first lamp has lit up is lit up automatically when the bank angle of the motorcycle becomes a specified value or greater with the first lamp lit up.

Preferably, the lamps are controlled with the control means so that, in case that the curve or turn is an intersection branching at least in two, left and right directions, the first lamp on the side corresponding to a predetermined left or right direction lights up automatically.

Further, preferably the lamps are controlled with the control means so that, in case of a curve curving to left or right direction, the first lamp on the side corresponding to the curving direction of the curve lights up automatically.

Still further, preferably the illumination angle zone of the second lamp changes automatically according to the magnitude of the bank angle.

Likewise, the magnitude of the bank angle may be automatically obtained from the vehicle speed and the yaw rate values obtained by detecting vehicle speed and yaw rate values of the vehicle.

Also, in case that the bank angle of the motorcycle becomes a specified value or smaller when the vehicle is driving a curve or a turn with the second lamp lit up, the second lamp might go out automatically.

Therein, the specified value of the bank angle for automatically putting out the second lamp might be smaller than the specified value of the bank angle for automatically lighting up the second lamp.

Preferably, the illuminating direction of the first lamp is set below a horizontal cut line, the illuminating direction of the second lamp is set above the horizontal cut line.

Further, preferably the left and right pair of second lamps are constituted with two or more plural number of LEDs provided respectively in left and right positions in the front part of the vehicle.

Therein, the plural number of LEDs might be disposed side by side in the vehicle width direction in left and right positions of the front part of the vehicle, and respective LEDs might be preset to light up individually in different angular ranges of the bank angle.

According to a preferred embodiment, the vehicle is a motorcycle which is further provided with a headlight in the front central part of the vehicle, and the first and second lamps are adjusted to light up when the headlight is lit up.

In the following, the present invention is explained in greater detail with respect to several embodiments thereof in conjunction with the accompanying drawings, wherein:

| | |
|---|---|
| Fig. 1 | shows a layout of lamps of a motorcycle according to an embodiment, |
| Fig. 2 | shows a screen light distribution of lamps of this embodiment, |
| Figs. 3(a) and 3(b) | show another screen light distribution of lamps of this embodiment, |
| Fig. 4 | is a drawing for explaining illumination zones of lamps, when cornering, of this embodiment, |
| Fig. 5 | is a drawing for explaining illumination zones of lamps, when turning left at an intersection, of this embodiment, |
| Fig. 6 | shows a layout of the first lamps and second lamps of the motorcycle of this embodiment, |
| Figs. 7(a) and 7(b) | show a layout of the first lamps and second lamps on the front cowl of this embodiment, |
| Fig. 8 | is a flowchart showing basic steps of lighting up control of the first lamps and second lamps of this embodiment, |
| Fig. 9 | is a flowchart showing basic steps of lighting up and putting out control of the first lamps and second lamps of this embodiment, |
| Fig. 10 | shows a constitution of the second lamp of this embodiment, |
| Fig. 11 | shows a constitution of lamps of this embodiment, |
| Figs. 12(a) and 12(b) | are drawings for explaining a bank angle detection method of this embodiment, |
| Fig. 13 | is a drawing for explaining a control system of the motorcycle lamps of this embodiment, |
| Fig. 14 | shows a light distribution of a headlight when a conventional motorcycle drives straight ahead, |
| Fig. 15 | shows a light distribution of a headlight when a conventional motorcycle is cornering, |
| Figs. 16(a) and 16(b) | show screen light distributions of lamps by conventional active control, |
| Fig. 17 | is a drawing for explaining the illumination zones of the headlight using conventional active control when cornering, |
| Fig. 18 | is a drawing for explaining the illumination zone of a conventional headlight when cornering, and |
| Fig. 19 | is a drawing for explaining the illumination zone of a conventional headlight in an intersection. |

An embodiment of this invention is explained below in reference to drawings. In the drawings below, for the sake of simplifying explanation, components having substantially the same function are indicated with the same reference symbol. Further, the teaching thereof is not limited to the following embodiment.

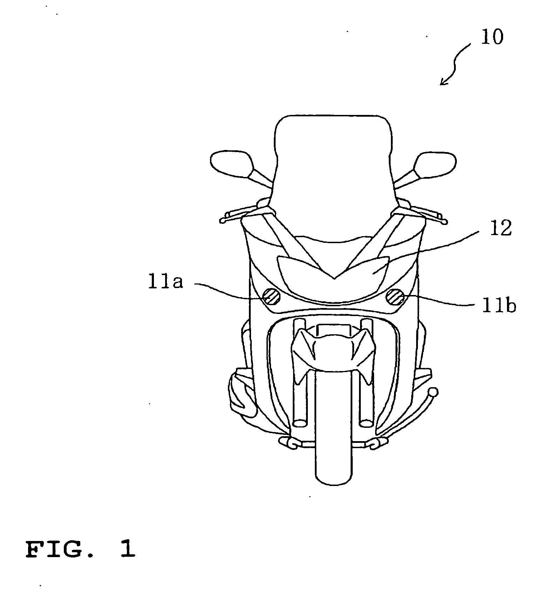

In reference to Fig. 1 to Fig. 3, concerning the illumination zone control method for the lamps of the motorcycle as an embodiment, basic constitution is explained.

Fig. 1 is a front view of a motorcycle 10 provided with lamps related to this embodiment. A pair of lamps 11 a and 11 b are provided in left and right positions relative to a headlight 12 placed in the center of the front of the vehicle, each controlled to be capable of illuminating a first illumination zone and a second illumination zone.

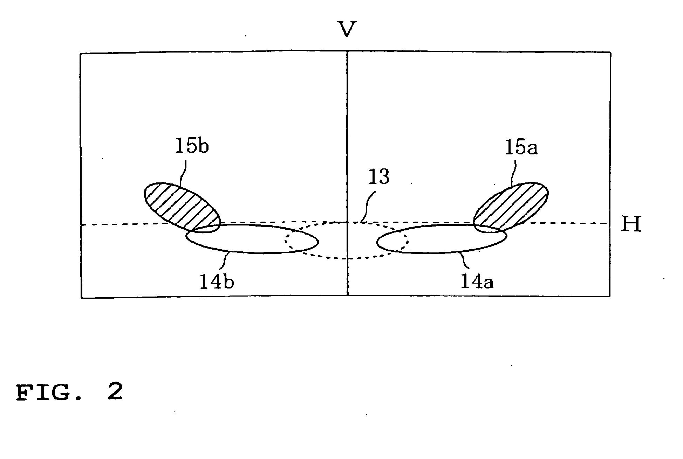

Fig. 2 is a drawing showing a screen light distribution of the lamps when the vehicle is upright. The screen light distribution of the headlight 12 expands left and right of the vertical centerline V, having an illumination zone 13 aimed below a horizontal line H (cut line). The screen light distribution of the lamp 11 a provided in a right hand position on the front side of the vehicle has a first illumination zone 14a shifted to the right relative to the illumination zone 13 of the headlight 12 and a second illumination zone 15a shifted above the horizontal line H. Likewise, the screen light distribution of the lamp 11 b provided in a left hand position on the front side of the vehicle has a second illumination zone 15b aimed above the horizontal line H relative to a first illumination zone 14b shifted to the left.

Incidentally in Fig. 2, the first illumination zones 14a, 14b, and the second illumination zones 15a, 15b are aimed respectively for positions in left-right symmetry. However, they may be aimed for asymmetric positions in consideration of opposite drive lanes. For example, in countries having keep-left traffic regulations, if the screen light distribution of the first illumination zone 14a or the second illumination zone 15a of the right hand lamp 11 a located on the opposite lane side is aimed lower than the screen light distribution of the first illumination zone 14a or the second illumination zone 15a of the left hand lamp 11a, glare to oncoming vehicles can be reduced.

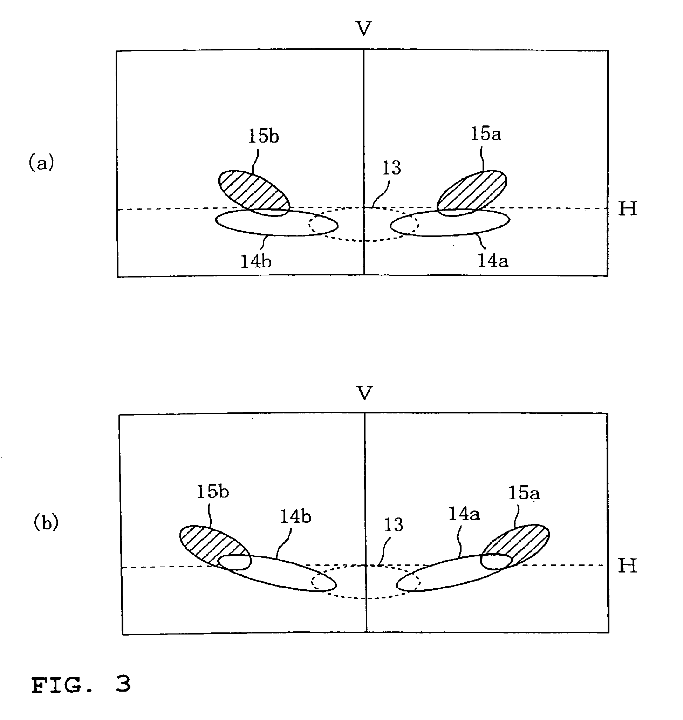

Further, while the second illumination zones 15a and 15b as shown in Fig. 2 are aimed respectively shifted to right or left from the first illumination zone 14a and 14b, they may be shifted above the first illumination zones 14a and 14b as shown in Fig. 3(a). In other words, the first illumination zones 14a and 14b have only to be shifted to right or left relative to the illumination zone 13 of the headlight 12, and the second illumination zones 15a and 15b shifted above relative to the first illumination zones 14a and 14b. However, in order to provide continuity of illumination zones of lamps, it is preferable to place the respective illumination zones (13, 14a, 15a) and the illumination zones (13, 14b, 15b) to overlap each other.

Further as shown in Fig. 3(b), part of the first illumination zones 14a and 14b may be aimed above the horizontal line H (cut line). Moreover, the second illumination zones 15a and 15b may be spot illumination.

Fig. 1 shows an example of the lamp of this embodiment constituted with a left-right pair of lamps 11 a and 11 b. However, the constitution need not necessarily be such a left-right independent one. For example, it is possible to make the headlight 12 have the screen light distribution of the first illumination zones 14a, 14b, and the second illumination zones 15a, 15b, in addition to the screen light distribution of the illumination zone 13 shown in Fig. 2 or Fig. 3(a), (b), and to control the illumination zones of the lamps of this embodiment. In other words, the lamps of this embodiment have only to be controlled to be capable of illuminating the first illumination zones 14a, 14b, and the second illumination zones 15a, 15b for both left and right directions. Any lamp constitution may be used to control such illumination zones.

While various embodiment constitutions of the lamp are shown below, the teaching thereof is not limited to those. For example, even in case plural lamps are united into one and looks like a single lamp from outside, such lamps are included in the lamp related to this embodiment as long as they are controlled to illuminate the above-mentioned illumination zones. Further, the lamp is not limited to that constituted with individual lamps. For example, a single light source may be used to obtain different light distributions using combinations of lenses and filters. Further, respective lamps may be constituted with plural light sources like LEDs.

An illumination zone control method of the lamps of the motorcycle of this embodiment is constituted as follows: With a motorcycle 10 provided with lamps 11 a and 11 b having a screen light distribution as shown in Fig. 2 or Fig. 3 (a) or 3(b), control is made to automatically light up one of the pair of lamps 11 a and 11 b and illuminate first illumination zones 14a and 14b from a point before a corner when the vehicle is to enter the corner. When the motorcycle 10 drives the corner after entering the corner, control is made to illuminate the second illumination zones 15a or 15b when the bank angle of the vehicle becomes a specified value or greater, and automatically light up the lamp on the same side as the side on which the lamp has lit up.

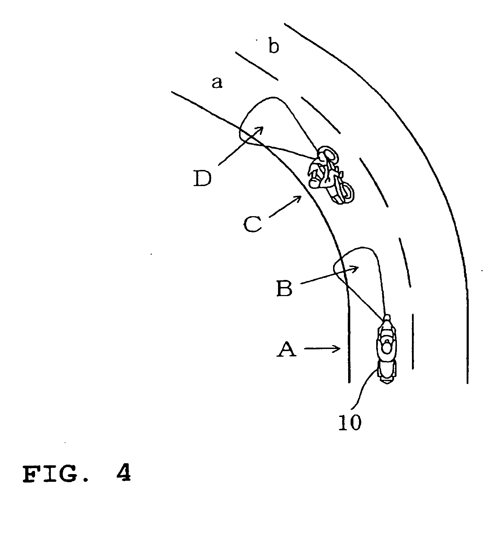

Fig. 4 shows illumination zones of lamps on a drive road when cornering using the illumination zone control method for the lamps of this embodiment. By lighting up the left side lamp 11 b controlled to illuminate the first illumination zone 14b at the point A before the motorcycle 10 entering a left curve corner, it is possible to illuminate the inside point B of the drive lane (a) on the forward side of the left curve.

Further, by lighting up the left side lamp 11 b controlled to illuminate the second illumination zone 15b at the point C at which the bank angle of the vehicle becomes a specified value or greater when the vehicle 10 is cornering with the vehicle banked after entering the corner, it is possible to illuminate the inside point D of the drive lane (a) on the forward side of the left curve.

By the above method, in comparison with the conventional method shown in Fig. 18, before entering the corner, foresight action for the drive road important for the rider becomes possible. As a result, corresponding to the rider's foresight action, the illumination zone of the lamp can be controlled most appropriately.

Lighting up the lamp in two steps as described above can be made to be controlled that in the first step (before entering the corner), for example, as interlocked with the turn signal operation or the map information; and in the second step (while cornering), as interlocked with the detection of the specified bank angle.

Map information may be obtained for example using the navigation system using the GPS system. It has only to adjust to automatically light up the lamp when the vehicle reaches predetermined point to the corner by automatically detecting the corner from the map information.

With the above method, the vehicle bank detection and the light distribution adjustment of lamps are not made when the vehicle runs straight ahead.

While the method of controlling the lighting of the left side lamp 11 b for the left curve cornering is explained in reference to Fig. 4, a similar lighting control of the right side lamp 11 a may be made for the right curve cornering.

While Fig. 4 does not show the illumination zone of the headlight 12, because lighting up the lamps 11 a and 11 b is normally unnecessary except for the night drive, it is preferable to adjust so that the lamps 11 a and 11 b light up when the headlight 12 is lighting up.

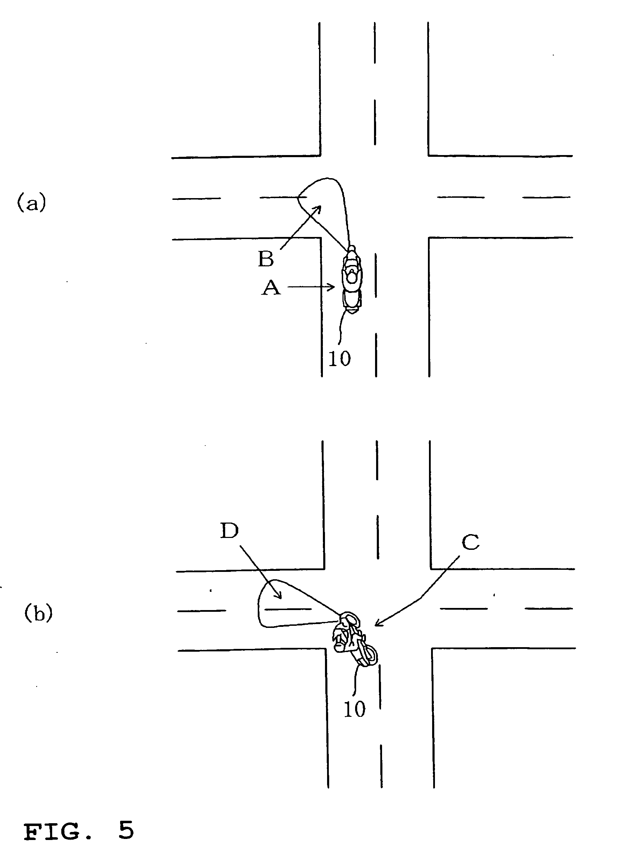

Next, in contrast to the conventional illumination of the lamp at an intersection shown in Fig. 19, an illumination zone control method of this invention using the lamps 11 a and 11 b at an intersection will be explained in reference to Figs. 5(a) and 5(b).

When the motorcycle 10 makes a left turn at an intersection as shown in Fig. 5(a), it is possible to illuminate the point B on a left turn approach road by lighting up the left side lamp 11 b controlled to illuminate the first illumination zone 14b at the point A before making the left turn.

Further, as shown in Fig. 5(b), after entering the intersection, when the motorcycle 10 enters a left turn state with the vehicle banked, it is possible to illuminate the point D on the forward side of the left turn approach road by lighting up the left side lamp 11 b controlled to illuminate the second illumination zone 15b at the point C where the vehicle bank angle becomes a specified value or greater.

Lighting up the lamp in two steps as described above may be made to be controlled automatically as interlocked with for example turn signal operation or map information in the first step (before entering the intersection), or interlocked with the detection of a specified bank angle in the second step (when turning left or right at an intersection).

In particular, because turning an intersection is necessarily accompanied by a turn signal operation, lighting up control of the lamp in the first step is easily carried out by interlocking it with the turn signal operation. In case that the lighting up is controlled as interlocked with map information, in case of turning at an intersection branching into at least two, left and right directions, it is necessary to adjust in advance to light up automatically the lamp on the side corresponding to a predetermined left or right direction.

Because the turn signal operation is made also when changing lanes, it is preferable to adjust that the lighting up the lamp in the first step as interlocked with the turn signal operation is not made outside the intersection. For example, it may be arranged that information on an intersection is detected from map information, and lighting up the lamp in the first step is not made unless information on the intersection is detected, even if a turn signal operation is made.

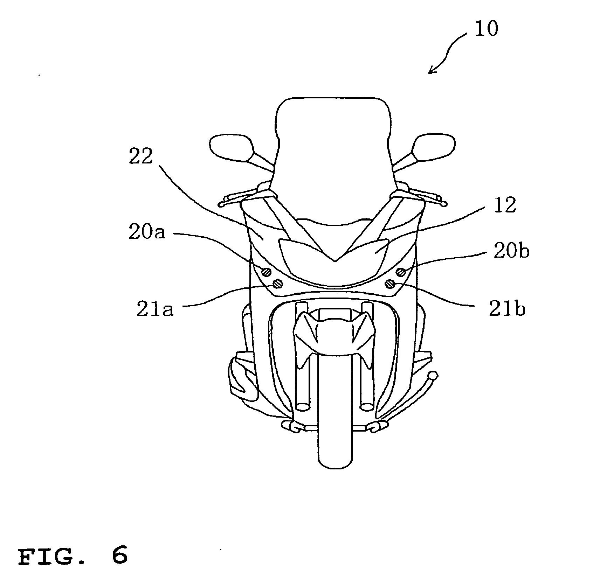

While the pair of lamps 11 a and 11 b of this embodiment are provided in the left and right positions on the front part of the vehicle 10 as shown in Fig. 1, they may be constituted as shown in Fig. 6 with a pair of first lamps 20a and 20b for illuminating the first illumination zones 14a and 14b (See Fig. 2) and a pair of second lamps 21 a and 21 b for illuminating the first illumination zones 15a and 15b (See Fig. 2).

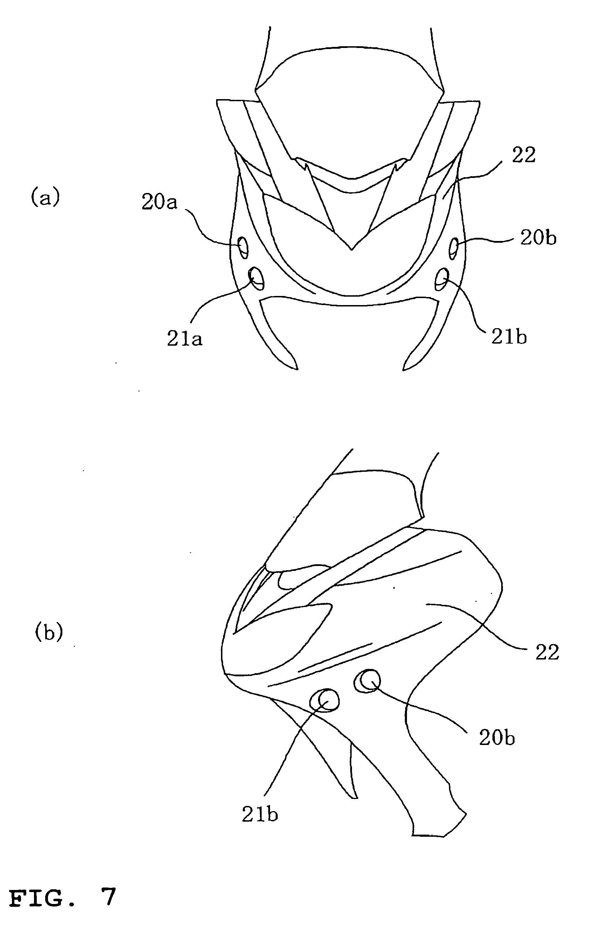

The pair of first lamps 20a and 20b and the pair of second lamps 21 a and 21 b may be provided in the left and right positions on the front part of the vehicle 10. Figs. 7(a) and 7(b) show an example in which the first lamps 20a and 20b and the second lamps 21 a and 21 b are actually provided on the front cowl 22. Fig. 7(a) is a front oblique view, while Fig. 7(b) a left oblique view.

The illumination zones of the lamps of the motorcycle provided with the fist and second lamps are controlled as described below.

In other words, when the motorcycle 10 enters a corner, the first lamp 20a or 20b on the side corresponding to the direction indicated with the turn signal is automatically lit up as interlocked with the turn signal operation. After the motorcycle 10 entering the corner, when driving the corner, in case that the bank angle of the vehicle 10 becomes a specified value or greater, the second lamp 21 a or 21 b on the same side as the side on which the first lamp 20a or 20b has lit up lights up automatically.

Incidentally, the illumination zones 15a and 15b of the second lamps 21 a and 21 b in the screen light distribution when the vehicle is upright are aimed above the illumination zones 14a and 14b of the first lamps 20a and 20b (See Fig. 2).

Further, instead of interlocking with the turn signal operation described above, it may be adjusted that the corner is automatically detected from map information and one of the pair of first lamps 20a and 20b is automatically lit up when the motorcycle 10 reaches a predetermined point to the corner.

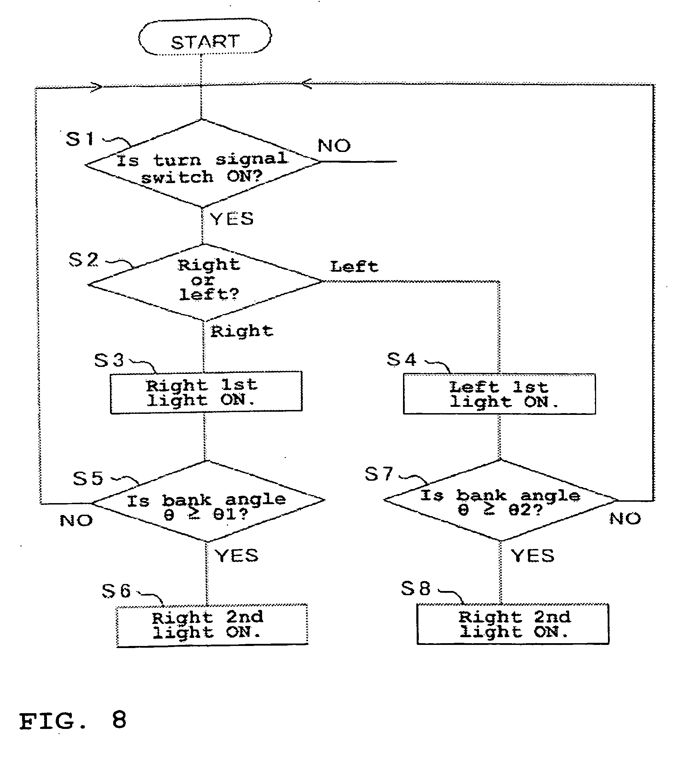

Next, referring to a flowchart shown in Fig. 8, basic steps of controlling the lighting of the lamps related to this embodiment will be explained.

First, in the step S1, whether or not the turn signal switch (SW) is ON is detected. If ON (YES), in the step S2, which of the left and right turn signals is ON is confirmed. In case that the right side turn signal is confirmed to be ON, the right side first lamp is lit up (step S3). In case that the left side turn signal is confirmed to be ON, the left side first lamp is lit up (step S4).

Next, in case that the right side first lamp is lit up, the bank angle $\theta$ of the vehicle is detected in the step S5. In case that the magnitude of the bank angle is greater than a specified value $\theta_1$ (YES), the right side second lamp is lit up (step S6).

In case that the left side first lamp is lit up, the bank angle $\theta$ of the vehicle is detected in the step S7. In case that the magnitude of the bank angle is greater than a specified value $\theta_2$ (YES), the left side second lamp is lit up (step S8).

Here, while the specified values $\theta_1$ and $\theta_2$ corresponding to the left and right bank angles may be set to any values, they may be changed in advance for example in consideration of relationship to opposite lanes. Or, they may be set to an identical value as a matter of course.

Since the second lamps do not light up when the first lamps are not lit up, the second lamps do not light up when the motorcycle is driving straight ahead even if the bank angle θ exceeds $\theta_1$ or $\theta_2$.

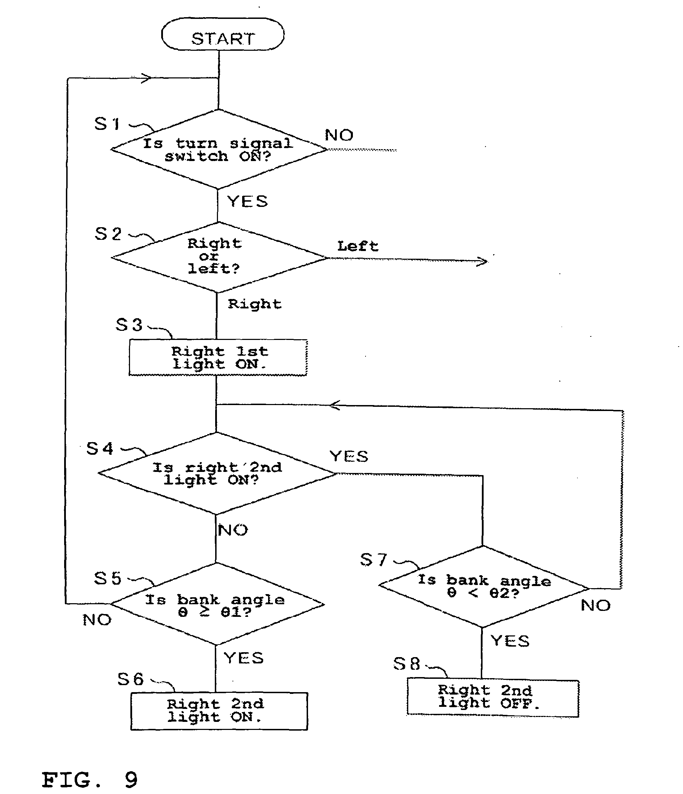

Fig. 9 is a flowchart for explaining more detailed steps of controlling the lamps of this embodiment. The left-right pair of first and second lamps are controlled in the same steps and independently. Therefore, only the steps of controlling the lighting of the right side first and second lamps are shown here, and the steps of controlling the lighting of the left side first and second lamps are omitted.

First, in the step S1, whether or not the turn signal switch (SW) is ON is detected. If ON (YES), in the step S2, which of the left and right turn signals is ON is confirmed. In case that the right side turn signal is confirmed to be ON, the right side first lamp is lit up (step S3).

Next, in the step S4, whether the right side second lamp is lit up is confirmed. If not lit up (NO), the bank angle θ of the vehicle is detected in the step S5. In case that the magnitude of the bank angle is greater than a specified value $\theta_1$ (YES), the right side second lamp is lit up (step S6).

In case that the right side second lamp is lit up (YES) in the step S4, the bank angle θ of the vehicle is detected in the step S7. In case that the magnitude of the bank angle is less than a specified value $\theta_2$ (YES), the right side second lamp is put out (step S8).

Here, in cornering, as for the time point of stating cornering while gradually banking the vehicle and the time point of ending the cornering while gradually raising up the banked vehicle, even in case of cornering the same dimension of turning radius, there is a characteristic that the vehicle's bank angle is relatively great at the time point of starting the cornering. Therefore, as for the bank angles $\theta_1$ and $\theta_2$ for determining the time points of lighting up and putting out the second lamp, setting that $\theta_1 > \theta_2$ makes it possible to control the lighting up and putting out the second lamp when the turning radius reaches about the same dimension.

In case of driving along continuous curves such as an S-curve, a control is also possible to light up or put out the second lamp on the banked side by also detecting the banked direction, left or right, of the vehicle.

It is also possible to make threshold values $\theta_1$ and $\theta_2$ for lighting up the second lamps variable by the banking speed of the vehicle, or differential of the bank angle θ. For example, in case of a rapid bank, it is possible to illuminate forward driving direction without delay by setting the threshold values $\theta_1$ and $\theta_2$ to be smaller.

Further, when cornering with the second lamp lit up, it is possible to automatically change the illumination zone of the second lamp according to the magnitude of the bank angle. By the so-called active control of the illumination zone of the second lamp, it is possible to illuminate optimum zone on the drive road according to the change in curve.

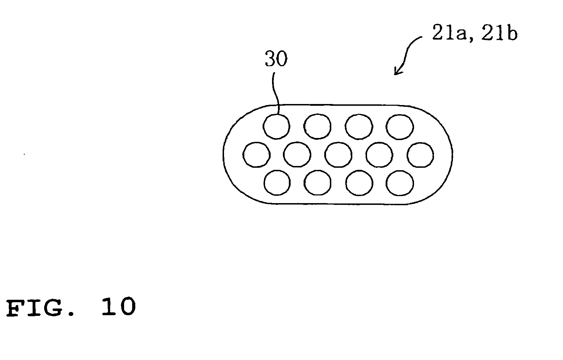

In order to change the illumination zones (light distribution) of the second lamps 21 a and 21 b, while it is a common practice to turn lenses and light emitting members, it is also possible to change the illumination zones by constituting the second lamps 21 a and 21 b with a plural number of light sources 30 (such as LEDs) placed side by side as shown in Fig. 10. In other words, by presetting respective LEDs 30 to light up in different angle ranges of the bank angle, it is possible to automatically light up specified LEDs according to the magnitude of the bank angle, to illuminate predetermined illumination zones, so that the illumination zones of the second lamps 21 a and 21 b are automatically changed.

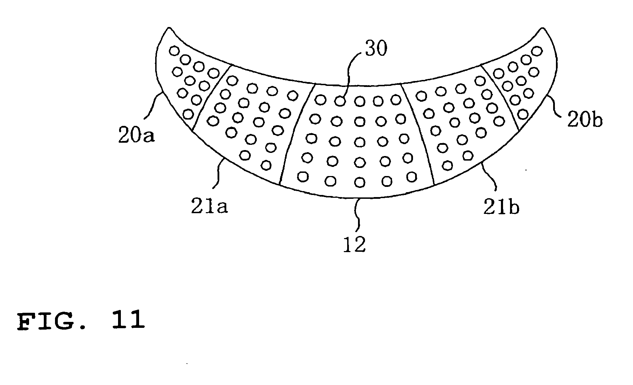

Further, the first lamps 20a and 20b, and the second lamps 21 a and 21 b, as well as the headlight 12, may be constituted with a plural number of light sources 30. For example, as shown in Fig. 11, the lamps related to this invention may be constituted as a single unit constituted with a plural number of LEDs 30. This unit is made up of five regions. The central region 12 is provided with LEDs corresponding to the headlight. The regions 21a and 21b adjoining left and right sides of the region 12 are provided with LEDs corresponding to the second lamps. The regions 20a and 20b on both sides are provided with LEDs corresponding to the first lamps. The LEDs placed in respective regions are controlled to illuminate the illumination zones of the respective lamps.

Incidentally, the layout of the plural number of LEDs 30 shown in Fig. 10 and 11 is an example; there is no restriction to the number and the manner of placing the LEDs used.

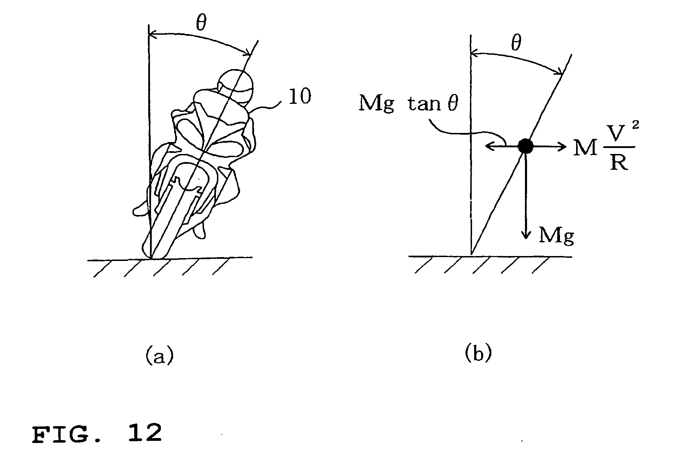

In this embodiment, the bank angle may be detected by a method as shown in Figs. 12(a) and 12(b).

As shown in Fig. 12(a), when the vehicle 10 is driving with a bank angle of θ, assuming the mass of the vehicle 10 (including the rider) to be M as shown in Fig. 12(b), the following relationship is established between the gravitational force (Mg) and the centrifugal force (MV²/R), acting on the center of gravity of the vehicle 10.

$$Mg \tan \theta = MV^2/R \text{ (V denoting vehicle speed; R, turning radius) .... (1)}$$

Assuming the rotary angular speed of the vehicle 10 in a horizontal plane (yaw rate) to be ω, it follows that

$$V = R\omega \text{ ... (2)}$$

Therefore, from the equations (1) and (2), the bank angle θ is

$$\theta = \tan^{-1}(V\omega/g) \ldots (3)$$

In other words, the bank angle θ is automatically obtained from values of the speed V of the vehicle 10 and the yaw rate ω using the equation (3). The yaw rate ω can be measured using a gyro.

By the way, the bank angle θ may be obtained, without using the equation (3), by obtaining the speed V and the turning radius R of the vehicle 10 from the equation (1). In that case, the turning radius R may be obtained from map data of a navigation system using the GPS.

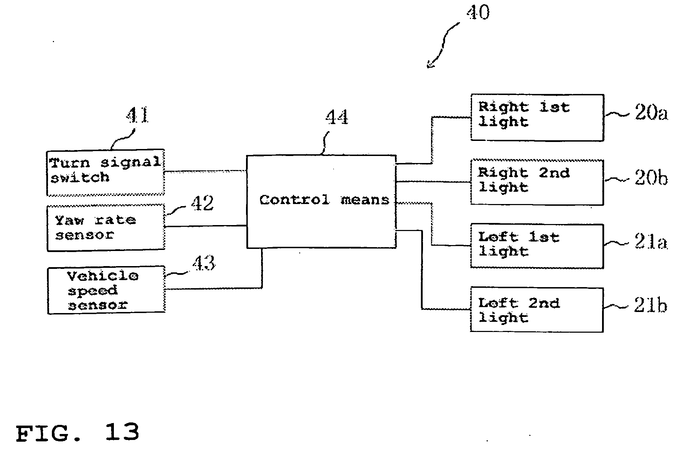

Next, a basic constitution of a motorcycle lamp 40 of this embodiment with its illumination zone controlled is shown in Fig. 13.

As shown in Fig. 13, a control means 44 (for example an MCU) automatically lights up the right or left side first lamp 20a or 20b corresponding to the direction indicated with the turn signal as interlocked with the operation of the turn signal switch 41. The control means 44 also lights up automatically the second lamp 21a or 21 b on the same side as the side on which the first lamp 20a or 20b has lit up when the motorcycle's bank angle becomes a specified value or greater in the state of the first lamps 20a or 20b remaining lit up. Incidentally, the bank angle is obtained from values of the yaw rate and the vehicle speed detected with the yaw rate sensor 42 and the vehicle speed sensor 43.

Incidentally, the first lamps 20a and 20b and the second lamps 21 a and 21 b are provided as paired in left and right positions on the front part of the motorcycle. The illumination zones of the second lamps 21 a and 21 b when the motorcycle is upright are aimed to be above the illumination zones of the first lamps 20a and 20b.

Further, a control may be made with the control means 44 so as to automatically light up one of the first lamps 20a and 20b when the motorcycle reaches a predetermined point to the corner by automatically detecting the corner from map information instead of the turn signal switch 41 mentioned above. Map information may be obtained for example with the navigation system using the GPS system.

While the teaching of the invention is explained above by way of preferable embodiments, such descriptions are not limiting items. Therefore, various modifications may be made. For example, in case of a cornering with sudden entry into a deep bank angle, lighting up the first lamp may be skipped to light up only the second lamp when the bank angle exceeds the threshold values $\theta_1$ and $\theta_2$.

The teaching of the present invention can provide an illumination zone control method for lamps of a motorcycle capable of controlling the illumination zones of the lamps of the motorcycle in response to foresight actions of the rider and motorcycle lamps.

The description above discloses (amongst others) an embodiment of an illumination zone control method of the lamps of a motorcycle, in a motorcycle provided with lamps for illuminating left and light directions in front of the vehicle, the lamps are controlled to be capable of illuminating a first illumination zone and a second illumination zone for respective left and right directions. The lamps are: controlled to illuminate the first illumination zone, from a point to the corner, for left or light direction when the motorcycle is to enter a corner, and controlled to illuminate the second illumination zone for left or right direction after the motorcycle entering the corner, while driving the corner, in case that the bank angle of the motorcycle becomes a specified value or greater.

In a preferable embodiment, the lamps are constituted with left and right pair of lamps provided in the front part of the vehicle, and the left and right lamps are respectively controlled to be capable of illuminating the first illumination zone and the second illumination zone.

In a preferable embodiment, the lamps are: automatically controlled to illuminate the first illumination zone on the side corresponding to the direction indicated with a turn signal as interlocked with the operation of the turn signal when the motorcycle is to enter a corner, and automatically controlled to illuminate the second illumination zone on the same side as the side illuminating the first illumination zone after the motorcycle entering the corner, while driving the corner, in case that the bank angle of the motorcycle becomes a specified value or greater.

In a preferable embodiment, the second illumination zones in screen light distribution when the vehicle is upright are aimed to be above the first illumination zone.

In a preferable embodiment, the lamps are constituted with left and right pair of first lamps and left and right pair of second lamps provided in the front part of the vehicle; when the motorcycle is to enter a corner, the first lamps are controlled, from a point to the corner, to automatically light up and illuminate the first illumination zone for left or light direction; and after the motorcycle entering the corner, while driving the corner, in case that the bank angle of the motorcycle becomes a specified value or greater, the second lamp is controlled to automatically light up and illuminate the second illumination zone for left or right direction.

In a preferable embodiment, the lamp is controlled to be capable of illuminating the first and the second illumination zones by controlling a lens or a reflector disposed on a light source of the lamp.

Another embodiment of an illumination zone control method of the lamps of the motorcycle as discussed above is a control method of controlling the illumination zones of the lamps of the motorcycle when the motorcycle is cornering. The motorcycle is provided with a left and right pair of first lamps and a left and right pair of second lamps in the front part of the vehicle. The illumination zones of the second lamps in screen light distribution when vehicle is upright are aimed to be above the illumination zones of the first lamps. When the motorcycle enters a corner, as interlocked with operation of a turn signal, the first lamp on the side corresponding to the direction indicated with the turn signal lights up automatically. After the motorcycle entering the corner, while driving the corner, in case that the bank angle of the motorcycle becomes a specified value or greater, the second lamp on the same side as the side on which the first lamp has lit up lights up automatically.

Yet another embodiment of an illumination zone control method of the lamps of the motorcycle as discussed above is a control method of controlling the illumination zones of the lamps of the motorcycle when the motorcycle is cornering. The motorcycle is provided with a left and right pair of first lamps and a left and right pair of second lamps in the front part of the vehicle. The illumination zones of the second lamps in screen light distribution when vehicle is upright are aimed to be above the illumination zones of the first lamps. When the motorcycle enters a corner, the corner is automatically detected from map information. When the motorcycle reaches a predetermined point to the corner, one of the pair of first lamps lights up automatically. After the motorcycle entering the corner, while driving the corner, in case that the bank angle of the motorcycle becomes a specified value or greater, the second lamp on the same side as the side on which the first lamp has lit up lights up automatically.

Here, in case that the corner is an intersection branching into at least two, left and right directions, it is preferable that the first lamp on the side corresponding to a predetermined one of left and right directions lights up automatically.

Further, in case that the corner is a curve curving to left or right direction, it is preferable that the first lamp on the side corresponding to the curving direction of the curve lights up automatically.

In a preferable embodiment, the illumination zones of the second lamps change automatically according to the magnitude of the bank angle.

It is preferable to obtain the magnitude of the bank angle automatically from the vehicle speed and the yaw rate value obtained by detecting vehicle speed and yaw rate value of the motorcycle.

In a preferable embodiment, when the motorcycle is driving a corner with the second lamp lit up, in case that the bank angle of the motorcycle becomes a specified value or smaller, the second lamp goes out automatically.

It is preferable that the specified value of the bank angle for automatically putting out the second lamp is smaller than the specified value of the bank angle for automatically lighting up the second lamp.

In a preferable embodiment, the illuminating direction of the first lamp is set below a horizontal cut line, and the illuminating direction of the second lamp is spot illumination set above the horizontal cut line.

In a preferable embodiment, the left and right pair of second lamps are constituted with two or more plural number of LEDs provided respectively in left and right positions in the front part of the vehicle.

The plural number of LEDs are preferably disposed side by side in the vehicle width direction in left and right positions of the front part of the vehicle, and respective LEDs are preset to light up individually in different angular ranges of the bank angle.

In a preferable embodiment, the motorcycle is further provided with a headlight in the front central part of the vehicle, and the first and second lamps are adjusted to light up when the headlight is lit up.

Further, motorcycle lamps of these embodiments are the motorcycle lamps provided with a control means that controls the illumination zones of the lamps. The lamps are controlled to be capable of illuminating a first illumination zone and a second illumination zone for respective left and right directions. The lamps are: controlled by the control means, from a point to the corner, to automatically light up and illuminate the first illumination zone for left or light direction when the motorcycle is to enter a corner, and controlled to automatically light up and illuminate the second illumination zone for left or right direction after the motorcycle entering the corner, while driving the corner, in case that the bank angle of the motorcycle becomes a specified value or greater.

In a preferable embodiment, the second illumination zones in screen light distribution when the vehicle is upright are aimed to be above the first illumination zone.

Still further, motorcycle lamps of these embodiments are the motorcycle lamps provided with a control means that controls the illumination zones of the lamps. The lamps are constituted with a left and right pair of first lamps and a left and right pair of second lamps provided in the front part of the vehicle. The lamps are constituted with first lamps and second lamps respectively in left and right pairs provided in the front part of the vehicle. The illumination zones of the second lamps in screen light distribution when vehicle is upright are aimed to be above the illumination zones of the first lamps. The left and right pair of first lamps are controlled with the control means to light up automatically the first lamp on the side corresponding to the direction indicated with the turn signal as interlocked with the turn signal operation. The left and right pair of second lamps are controlled with the control means such that the second lamp on the same side as the side on which the first lamp has lit up is lit up automatically when the bank angle of the motorcycle becomes a specified value or greater with the first lamp lit up.

Other motorcycle lamps of these embodiments are the motorcycle lamps provided with a control means that controls the illumination zones of the lamps. The lamps are constituted with a left and right pair of first lamps and a left and right pair of second lamps provided in the front part of the vehicle. The illumination zones of the second lamps in screen light distribution when vehicle is upright are aimed to be above the illumination zones of the first lamps. The left and right pair of first lamps are controlled with the control means such that the corner is automatically detected from the map information and one of the left and right pair of first lamps are lit up automatically when the motorcycle reaches a predetermined point to the corner. The left and right pair of second lamps are controlled with the control means such that the second lamp on the same side as the side on which the first lamp has lit up is lit up automatically when the bank angle of the motorcycle becomes a specified value or greater with the first lamp lit up.

Here, in case that the corner is an intersection branching into at least two, left and right directions, it is preferable that the first lamp on the side corresponding to a predetermined one of left and right directions lights up automatically.

Further, in case that the corner is a curve curving to left or right direction, it is preferable to be controlled with the control means that the first lamp on the side corresponding to the curving direction of the curve lights up automatically.

In a preferable embodiment, the illumination angle zones of the second lamps change automatically according to the magnitude of the bank angle.

It is preferable to obtain the magnitude of the bank angle automatically from the vehicle speed and the yaw rate value obtained by detecting vehicle speed and yaw rate value of the motorcycle.

In a preferable embodiment, when the motorcycle is driving a corner with the second lamp lit up, in case that the bank angle of the motorcycle becomes a specified value or smaller, the second lamp goes out automatically.

It is preferable that the specified value of the bank angle for automatically putting out the second lamp is smaller than the specified value of the bank angle for automatically lighting up the second lamp.

In a preferable embodiment, the illuminating direction of the first lamp is set below a horizontal cut line, and the illuminating direction of the second lamp is spot illumination set above the horizontal cut line.

In a preferable embodiment, the left and right pair of second lamps are constituted with two or more plural number of LEDs provided respectively in left and right positions in the front part of the vehicle.

The plural number of LEDs are preferably disposed side by side in the vehicle width direction in left and right positions of the front part of the vehicle, and respective LEDs are preset to light up individually in different angular ranges of the bank angle.

In a preferable embodiment, the motorcycle is further provided with a headlight in the front central part of the vehicle, and the first and second lamps are adjusted to light up when the headlight is lit up.

As indicated above in an illumination zone control method of lamps of a motorcycle of these embodiments, by automatically lighting up the lamps to illuminate the advancing direction of a corner before the motorcycle enters the corner, and by automatically lighting up the lamps to illuminate certain zones when the motorcycle enters the corner and when the bank angle of the vehicle becomes a specified value or greater. Thus, it is possible to control the illumination zones of the lamps of the motorcycle while coping with the foresight action of a rider.

Lighting up the lamp in two steps as described above can be automatically controlled that in the first step (before entering the corner) as interlocked with the turn signal operation or the map information; and in the second step (while cornering) as interlocked with the detection of the specified bank angle.

In the second step (while cornering), because the illumination zone of the lamp is automatically changed according to the magnitude of the bank angle, an appropriate zone on the drive road can be illuminated according to the change in the curve.

Further, when the vehicle runs straight ahead, adjusting the light distribution of the lamp by detecting the vehicle bank is not made.

In the past, although the foresight action (changing the illumination zone according to the bank angle) was present concerning the illumination of the lamp in the night drive, the foresight action before entering the corner was not practiced.

The inventor of this application, in light of the above point, examined a method to permit the foresight action related to the illumination of the lamp even before entering the corner, reached a novel idea of a method that permits the foresight action of the illumination of the lamp, and arrived at these embodiments.

As discussed above, according to the above embodiments, there may be provided an illumination zone control method for lamps of a motorcycle capable of controlling the illumination zones of the lamps of the motorcycle always in response to the foresight action of the rider, wherein when a motorcycle 10 is to enter a corner, a first lamp 20a or 20b on the side corresponding to the direction indicated with a turn signal is automatically lit up as interlocked with the turn signal operation. If the bank angle of the motorcycle 10 becomes a specified value or greater when the motorcycle 10 is driving the corner after entering the corner, a second lamp 21a or 21 b on the same side as the side on which the first lamp 20a or 20b has lit up lights up automatically. The illumination zones 15a and 15b of the second lamps 21 a and 21 b in screen light distribution with the motorcycle upright are aimed to be above the illumination zones 14a and 14b of the first lamps 20a and 20b.

## Claims

1. Method for controlling lighting means (11a,b;20a,b;21a,b) of a vehicle (10), in particular a motorcycle, **characterized by**

   detecting an aim to enter a curve and/or to make a turn by checking an activation of a turn signal operation and/or a map information; and

   activating said lighting means (11a,b;20a,b;21a,b) to illuminate a first illumination zone (14a,b) for left and/or right directions ahead of the vehicle (10) when the aim is confirmed.

2. Method according to claim 1, **characterized in that** the vehicle is a motorcycle, and said lighting means (11a,b; 20a,b;21a,b) is activated to illuminate a second illumination zone (15a,15b) for left and/or right directions ahead of the motorcycle when a bank angle ($\theta$) of the motorcycle is found to be at least a set value ($\theta_1$) during driving the curve or during making the turn.

3. Method according to claim 2, **characterized in that** the motorcycle is provided with lamps (11a,b;20a,b;21a,b) as the lighting means for illuminating left and right directions in front of the motorcycle, said lamps (11a,b;20a,b;21a,b) are controlled to be capable of illuminating the first illumination zone (14a,b) and the second illumination zone (15a,b) for respective left and right directions, wherein the lamps (11a,b;20a,b;21a,b) are controlled to illuminate the first illumination zone (14a,b), from a point (A) before a curve or a turn, for left or right direction when the motorcycle is going to enter the curve or the turn, and controlled to illuminate the second illumination zone (15a,b) for left or right direction after the motorcycle has entered the curve or the turn, while driving the curve or the turn, in case that the bank angle ($\theta$) of the motorcycle becomes a specified value ($\theta_1,\theta_2$) or greater.

4. Method according to claim 3, **characterized in that** the lamps are constituted with a left and right pair of lamps (11a,b;20a,b;21a,b) provided in the front part of the vehicle, and wherein the left and right lamps (11a,b;20a,b;21a, b) are each controlled to be capable of illuminating the first illumination zone (14a,b) and the second illumination zone (15a,b).

5. Method according to claim 3 or 4, **characterized in that** the lamps are automatically controlled to illuminate the first illumination zone (14a,b) on the side corresponding to the direction indicated with a turn signal as interlocked with the operation of the turn signal when the motorcycle is going to enter the curve or the turn, and are automatically controlled to illuminate the second illumination zone (15a,b) on the same side as the side illuminating the first illumination zone (14a,b) after the motorcycle has entered the curve or the turn, while driving the curve or the turn, in case that the bank angle ($\theta$) of the motorcycle becomes a specified value ($\theta_1$) or greater.

6. Method according to one of the claims 2 to 5, **characterized in that** the second illumination zones (15a,b) in screen light distribution, when the vehicle is upright, are aimed to be above the first illumination zone (14a,b).

7. Method according to claim 2, **characterized in that** the lamps are constituted with a left and right pair of first lamps (20a,b) and a left and right pair of second lamps (21a,b) provided in the front part of the vehicle, and, when the motorcycle is going to enter the curve or the turn, the first lamps (20a,b) are controlled, from a point (A) before the curve or the turn, to automatically light up and illuminate the first illumination zone (14a,b) for left or right direction, and after the motorcycle has entered the curve or the turn, while driving the curve or the turn, in case that the bank angle ($\theta$) of the motorcycle becomes a specified value ($\theta_1$) or greater, the second lamp (21a,b) is controlled to automatically light up and illuminate the second illumination zone (15a,b) for left or right direction.

8. Method according to one of the claims 3 to 7, **characterized in that** the lamp is controlled to be capable of illuminating the first and the second illumination zones (14a,b;15a,b) by controlling a lens or a reflector disposed on a light source of the lamp.

9. Method according to claim 2, **characterized in that** when the motorcycle is cornering, wherein the motorcycle is provided with a left and right pair of first lamps (20a,b) and a left and right pair of second lamps (21a,b) in the front part of the vehicle,

   the illumination zones (15a,b) of the second lamps (21a,b) in screen light distribution, when vehicle is upright, are aimed to be above the illumination zones (14a,b) of the first lamps (20a,b), and

   when the motorcycle is going to enter the curve or turn, the first lamp (20a;b) on the side corresponding to the direction indicated with a turn signal lights up automatically as interlocked with the operation of the turn signal, and after the motorcycle has entered the curve or turn, while driving the curve or turn, in case that the bank angle ($\theta$) of

the motorcycle becomes a specified value ($\theta_1$) or greater, the second lamp (21a,b) on the same side as the side on which the first lamp (20a,b) has lit up lights up automatically.

10. Method according to claim 2, **characterized in that** when the motorcycle is cornering, wherein the motorcycle is provided with a left and right pair of first lamps (20a,b) and a left and right pair of second lamps (21a,b) in the front part of the vehicle,

the illumination zones (15a,b) of the second lamps (21a,b) in screen light distribution, when vehicle is upright, are aimed to be above the illumination zones (14a,b) of the first lamps (20a,b), and

when the motorcycle is going to enter the curve or turn, the curve or turn is automatically detected from map information, and when the motorcycle reaches a predetermined point (A) before the curve or turn, one of the pair of first lamps (20a,b) lights up automatically, and

after the motorcycle has entered the curve or turn, while driving the curve or turn, in case that the bank angle ($\theta$) of the motorcycle becomes a specified value ($\theta_1$) or greater, the second lamp (21a,b) on the same side as the side on which the first lamp (20a,b) has lit up lights up automatically.

11. Method according to claim 10, **characterized in that** in case that the turn is an intersection branching at least in two, left and right directions, the first lamp (20a,b) on the side corresponding to a predetermined left or right direction lights up automatically.

12. Method according to claim 10, **characterized in that** in case of a curve curving to left or right direction, the first lamp (20a,b) on the side corresponding to the curving direction of the curve lights up automatically.

13. Method according to one of the claims 9 to 12, **characterized in that** the illumination zones (15a,b) of the second lamps (21 a,b) change automatically according to the magnitude of the bank angle ($\theta$).

14. Method according to one of the claims 9 to 13, **characterized in that** the magnitude of the bank angle ($\theta$) is automatically obtained from vehicle speed (V) and yaw rate ($\omega$) values obtained by detecting the vehicle speed (V) and the yaw rate ($\omega$) values of the vehicle.

15. Method according to one of the claims 9 to 14, **characterized in that** in case that the bank angle ($\theta$) of the motorcycle becomes a specified value ($\theta_1$) or smaller, when the motorcycle is driving the curve or turn with the second lamp (21 a,b) lit up, the second lamp (21a,b) goes out automatically.

16. Method according to claim 15, **characterized in that** the specified value ($\theta_1$) of the bank angle ($\theta$) for automatically putting out the second lamp (21 a.b) is smaller than the specified value ($\theta_2$) of the bank angle ($\theta_1$) for automatically lighting up the second lamp (21 a,b).

17. Method according to one of the claims 9 to 16, **characterized in that** the illuminating direction of the first lamp (20a, b) is set below a horizontal cut line (H), and the illuminating direction of the second lamp (21a,b) is spot illumination set above the horizontal cut line (H).

18. Method according to one of the claims 9 to 17, **characterized in that** the left and right pair of second lamps (21a, b) are constituted with two or more plural number of LEDs (30) provided respectively in left and right positions in the front part of the vehicle.

19. Method according to claim 18, **characterized in that** the plural number of LEDs (30) are disposed side by side in the vehicle width direction in left and right positions of the front part of the vehicle (10), and respective LEDs are preset to light up individually in different angular ranges of the bank angle ($\theta$).

20. Method according to one of the claims 9 to 19, **characterized in that** the motorcycle is further provided with a headlight (12,40) in the front central part of the vehicle (10), and the first and second lamps (21a,b) are adjusted to light up when the headlight (12,40) is lit up.

21. Vehicle (10) being provided with lighting means (11a,b;20a,b;21a,b) being adapted to illuminate a first illumination zone (14a,b) for left and/or right directions ahead of the vehicle (10), and with a control means (44), **characterized in that** the control means (44) is configured to detect an aim to enter a curve and/or to make a turn by checking an activation of a turn signal operation and/or a map information; and to activate said lighting means (11a,b;20a,b;21a,b) to illuminate a first illumination zone (14a,b) for left and/or right directions ahead of the vehicle (10) when the aim is confirmed.

22. Vehicle according to claim 21, **characterized in that** the vehicle is a motorcycle and the lighting means (11a,b;20a, b;21a,b) are adapted to illuminate a second illumination zone (15a,b) for respective left and/or right directions of the motorcycle, when the motorcycle is driving the curve and a bank angle ($\theta$) of the motorcycle is found to be at least a set value.

23. Vehicle according to claim 22, **characterized by** lamps (11a,b;20a,b;21a,b) as lighting means and the control means (44) for controlling the illumination zones (14a,b;15a,b) of the lamps, wherein the lamps are controlled to be capable of illuminating the first illumination zone (14a,b) and the second illumination zone (15a,b) for respective left and right directions, and wherein the lamps are controlled by the control means, from a point (A) before the curve or the turn, to automatically light up and illuminate the first illumination zone (14a,b) for left and right direction when the motorcycle is going to enter the curve or the turn, and controlled to automatically light up and illuminate the second illumination zone (15a,b) for left or right direction after the motorcycle has entered the curve or the turn, while driving the curve or the turn, in case that the bank angle ($\theta$) of the motorcycle becomes a specified value ($\theta_1$) or greater.

24. Vehicle according to claim 23, **characterized in that** the second illumination zones (15a,b) in screen light distribution, when the vehicle (10) is upright, are aimed to be above the first illumination zone (14a,b).

25. Vehicle according to claim 22, **characterized by** lamps (20a,b;21a,b) as lighting means and the control means (44) for controlling the illumination zones (14a,b;15a,b) of the lamps, wherein the lamps are constituted with a left and right pair of first lamps (20a,b) and a left and right pair of second lamps (21a,b) provided in the front part of the vehicle (10),
the illumination zones (15a,b) of the second lamps (21a,b) in screen light distribution, when the vehicle is upright, are aimed to be above the illumination zones (14a,b) of the first lamps (20a,b),
the control means (44) is adapted to control the left and right pair of first lamps (20a,b) to light up automatically the first lamp (20a,b) on the side corresponding to the direction indicated with the turn signal, as interlocked with the operation of a turn signal, and to control the left and right pair of second lamps (21a,b) such that the second lamp (21a,b) on the same side as the side on which the first lamp (20a,b)
has lit up is lit up automatically when the bank angle ($\theta$) of the motorcycle becomes a specified value ($\theta_1$) or greater with the first lamp (20a,b) lit up.

26. Vehicle according to claim 22, **characterized by** lamps (20a,b;21a,b) as lighting means, wherein the lamps are constituted with a left and right pair of first lamps (20a,b) and a left and right pair of second lamps (21a,b) provided in the front part of the vehicle (10),
the illumination zones (15a,b) of the second lamps (21a,b) in screen light distribution, when the vehicle is upright, are aimed to be above the illumination zones (14a,b) of the first lamps (20a,b),
the control means (44) is adapted to control the left and right pair of first lamps (20a,b) such that the curve or turn is automatically detected from the map information and one of the left and right pair of first lamps (20a,b) are lit up automatically when the motorcycle reaches a predetermined point (A) before the curve or turn, and to control the left and right pair of second lamps (21a,b) such that the second lamp (21 a,b) on the same side as the side on which the first lamp (20a,b) has lit up is lit up automatically when the bank angle ($\theta$) of the motorcycle becomes a specified value ($\theta_1$) or greater with the first lamp (20a,b) lit up.

27. Vehicle according to claim 26, **characterized in that** the control means (44) is adapted to control the lamps (20a, b;21 a,b) so that, in case that the curve or turn is an intersection branching at least in two, left and right directions, the first lamp (20a,b) on the side corresponding to a predetermined left or right direction lights up automatically.

28. Vehicle according to claim 26, **characterized in that** the control means (44) is adapted to control the lamps (20a, b;21a,b) so that, in case of a curve curving to left or right direction, the first lamp (20a,b) on the side corresponding to the curving direction of the curve lights up automatically.

29. Vehicle according to one of the claims 25 to 28, **characterized in that** an illumination angle zone of the second lamp (21a,b) changes automatically according to the magnitude of the bank angle ($\theta$).

30. Vehicle according to one of the claims 25 to 29, **characterized in that** the magnitude of the bank angle ($\theta$) is automatically obtained from the vehicle speed (V) and the yaw rate ($\omega$) values obtained by detecting vehicle speed (V) and yaw rate ($\omega$) values of the vehicle.

31. Vehicle according to one of the claims 25 to 30, **characterized in that** in case that the bank angle ($\theta$) of the motorcycle becomes a specified value ($\theta_1$) or smaller when the vehicle is driving a curve or a turn with the second lamp (21a,b) lit up, the second lamp (21a,b) goes out automatically.

32. Vehicle according to claim 31, **characterized in that** the specified value of the bank angle ($\theta_1$) for automatically putting out the second lamp (21 a,b) is smaller than the specified value of the bank angle ($\theta_2$) for automatically lighting up the second lamp (21a,b).

33. Vehicle according to one of the claims 25 to 32, **characterized in that** an illuminating direction of the first lamp (20a,b) is set below a horizontal cut line (H), the illuminating direction of the second lamp (21a,b) is set above the horizontal cut line (H).

34. Vehicle according to one of the claims 25 to 33, **characterized in that** the left and right pair of second lamps (21a, b) are constituted with two or more plural number of LEDs (30) provided respectively in left and right positions in the front part of the vehicle (10).

35. Vehicle according to claim 34, **characterized in that** the plural number of LEDs (30) are disposed side by side in the vehicle width direction in left and right positions of the front part of the vehicle (10), and respective LEDs (30) are preset to light up individually in different angular ranges of the bank angle ($\theta$).

36. Vehicle according to one of the claims 25 to 35, **characterized in that** the motorcycle is further provided with a headlight (40) in the front central part of the vehicle (10), and the first and second lamps (20a,b;21a,b) are adjusted to light up when the headlight (40) is lit up.

## Patentansprüche

1. Verfahren zum Steuern einer Beleuchtungseinrichtung (11 a,b; 20a,b; 21 a,b) eines Fahrzeuges (10), insbesondere eines Motorrades, **gekennzeichnet durch** Erfassen eines Zieles, in eine Kurve zu fahren und / oder Abzubiegen **durch** Prüfen einer Aktivierung eines Abbiegesignalbetriebs und / oder einer Information aus einem Plan; und Aktivierung der Beleuchtungseinrichtung (11a,b; 20a,b; 21 a,b), um eine erste Beleuchtungszone (14a,b) für die linke und / oder rechte Richtungen voraus des Fahrzeuges (10) zu beleuchten, wenn das Ziel bestätigt ist.

2. Verfahren nach Anspruch 1, **dadurch gekennzeichnet, dass** das Fahrzeug ein Motorrad ist und die Beleuchtungseinrichtung (11 a,b; 20a,b; 21 a,b) aktiviert ist, um eine zweite Beleuchtungszone (15a, 15b) für die linke und / oder rechte Richtung voraus des Motorrades zu beleuchten, wenn ein Bankwinkel ($\theta$) des Motorrades, zumindest als ein festgelegter Wert ($\theta_1$) während des Befahrens der Kurve oder während des Abbiegens festgestellt wird.

3. Verfahren nach Anspruch 2, **dadurch gekennzeichnet, dass** das Motorrad mit Lampen (11a,b; 20a,b; 21 a,b) als die Beleuchtungseinrichtung zum Beleuchten der linken oder rechten Richtung vor dem Motorrad versehen ist, wobei die Lampen (11 a,b; 20a,b; 21 a,b) gesteuert werden, um in der Lage zu sein, die erste Beleuchtungszone (14a,b) und die zweite Beleuchtungszone (15a,b) für die jeweils linke oder richte Richtung zu beleuchten, wobei die Lampen (11a,b; 20a,b; 21 a,b) gesteuert werden, die erste Beleuchtungszone (14a,b), von einem Punkt (A) vor einer Kurve oder einer Abbiegung für die linke oder rechte Richtung zu beleuchten, wenn das Motorrad in die Kurve oder die Abbiegung einfährt, und gesteuert werden, um die zweite Beleuchtungszone (15a,b) für die linke oder rechte Richtung zu beleuchten, nachdem das Motorrad in die Kurve oder die Abbiegung eingefahren ist, während des Fahrens der Kurve oder die Abbiegung, in dem Fall, dass der Bankwinkel ($\theta$) des Motorrades ein festgelegter Wert ($\theta_1$, $\theta_2$) oder größer wird.

4. Verfahren nach Anspruch 3, **dadurch gekennzeichnet, dass** die Lampen mit einem linken und rechten Paar von Lampen (11a,b; 20a,b; 21 a,b), vorgesehen in dem vorderen Teil des Fahrzeuges, ausgerüstet sind, und wobei die linken und rechten Lampen (11a,b; 20a,b; 21a,b) jeweils gesteuert werden, um in der Lage zu sein, die erste Beleuchtungszone (14a, b) und die zweite Beleuchtungszone (15a,b) zu beleuchten.

5. Verfahren nach Anspruch 3 oder 4, **dadurch gekennzeichnet, dass** die Lampen, automatisch gesteuert werden, um die erste Beleuchtungszone (14a,b) auf der Seite zu beleuchten, die der Richtung, angezeigt mit einem Abbiegesignal, entspricht, wie mit dem Betrieb des Abbiegesignales zwangsgekoppelt, wenn das Motorrad dabei ist, in die Kurve oder die Abbiegung zu fahren, und automatisch gesteuert werden, um die zweite Beleuchtungszone (15a, b) auf derselben Seite wie die Seite, die die erste Beleuchtungszone (14a, b) beleuchtet, zu beleuchten, nachdem das Motorrad in die Kurve oder Abbiegung eingefahren ist, während des Fahrens der Kurve oder der Abbiegung, eingefahren ist, in dem Fall, dass der Bankwinkel ($\theta$) des Motorrad ein festgelegter Wert ($\theta_1$) oder größer wird.

6. Verfahren nach einem der Ansprüche 2 bis 5, **dadurch gekennzeichnet, dass** die zweiten Beleuchtungszonen (15a, b) in Scheibenlichtverteilung, wenn das Fahrzeug aufrecht ist, beabsichtigt sind, oberhalb der ersten Beleuchtungszone (14a, b) zu sein.

7. Verfahren nach Anspruch 2, **dadurch gekennzeichnet, dass** die Lampen mit einem linken und rechten Paar von ersten Lampen (20a,b) und einem linken und rechten Paar von zweiten Lampen (21a,b), vorgesehen in dem vorderen Teil des Fahrzeuges, gebildet sind, wenn das Motorrad dabei ist, in die Kurve oder Abbiegung einzufahren, wobei die ersten Lampen (20a, b) gesteuert werden, von einem Punkt (A) vor der Kurve oder der Abbiegung, um automatisch die erste Beleuchtungszone (14a, b) für die linke oder rechte Richtung zu erhellen und zu beleuchten, und nachdem das Motorrad in die Kurve oder die Abbiegung eingefahren ist, während des Befahrens der Kurve oder der Abbiegung, in dem Fall, dass der Bankwinkel ($\theta$) des Motorrades ein festgelegter Wert ($\theta_1$) oder größer wird, die zweite Lampe (21a, b) gesteuert wird, um automatisch die zweite Beleuchtungszone (15a, b) für die linke oder rechte Richtung zu erhellen und zu beleuchten.

8. Verfahren nach einem der Ansprüche 3 bis 7, **dadurch gekennzeichnet, dass** die Lampe gesteuert wird, um in der Lage zu sein, die erste und zweite Beleuchtungszone (14a, b, 15a, b) durch Steuern einer Linse oder eines Reflektors, angeordnet an einer Lichtquelle der Lampe, zu beleuchten.

9. Verfahren nach Anspruch 2, **dadurch gekennzeichnet, dass** beabsichtigt wird, wenn das Motorrad eine Kurve fährt, wobei das Motorrad mit einem linken und rechten Paar von ersten Lampen (20a, b) und einem linken und rechten Paar von zweiten Lampen (21 a, b) in dem vorderen Teil des Fahrzeuges versehen ist, darauf abgezielt wird, dass die Beleuchtungszonen (15a, b) der zweiten Lampen (21 a, b) in Scheibenlichtverteilung, wenn das Fahrzeug aufrecht ist, oberhalb der Beleuchtungszonen (14a, b) der ersten Lampe (20a, b) sind, und

wenn das Motorrad dabei ist, in die Kurve oder die Abbiegung einzufahren, die erste Lampe (20a, b) auf Seite, die der Richtung, angezeigt mit einem Abbiegesignal, entspricht, automatisch aufleuchtet, da diese mit dem Betrieb des Abbiegesignals automatisch zwangsgekoppelt ist, und nachdem das Motorrad in die Kurve oder die Abbiegung eingefahren ist, während des Fahrens in der Kurve oder der Abbiegung, in dem Fall, dass der Bankwinkel ($\theta$) des Motorrades ein festgelegter Wert ($\theta_1$) oder größer wird, die zweite Lampe auf derselben Seite, wie die Seite, auf der die erste Lampe (20a, b) aufgeleuchtet hat, automatisch aufleuchtet.

10. Verfahren nach Anspruch 2, **dadurch gekennzeichnet, dass**, wenn das Motorrad in einer Kurvenfahrt ist, wobei das Motorrad mit einem linken und rechten Paar von ersten Lampen (20a, b) und einem linken und rechten Paar von zweiten Lampen (21 a, b) in dem vorderen Teil des Fahrzeuges versehen ist, dass die Beleuchtungszonen (15a, b) der zweiten Lampen (21 a, b) in Scheibenlichtverteilung, wenn das Fahrzeug aufrecht ist, darauf abzielen, oberhalb der Beleuchtungszonen (14a, b) der ersten Lampe (20a, b) sind, und wenn das Motorrad dabei ist, in die Kurve oder die Abbiegung einzufahren, die Kurve oder die Abbiegung aus der Information aus einem Plan automatisch erfasst wird, und wenn das Motorrad einen vorbestimmten Punkt (A) vor der Kurve oder Abbiegung erreicht, eine von dem Paar der ersten Lampen (20a, b) automatisch aufleuchtet, und nachdem das Motorrad in die Kurve oder Abbiegung eingefahren ist, während des Fahrens in der Kurve oder Abbiegung, in dem Fall der Bankwinkel ($\theta$) des Motorrades ein festgelegter Wert ($\theta_1$) oder größer wird, die zweite Lampe (21a, b) auf derselben Seite wie die Seite, auf der die erste Lampe (20a, b) aufgeleuchtet hat, automatisch aufleuchtet.

11. Verfahren nach Anspruch 10, **dadurch gekennzeichnet, dass** in dem Fall, dass die Abbiegung eine Kreuzung ist, die sich in zumindest zwei, eine linke und eine rechte Richtungen verzweigt, die erste Lampe (20a, b) auf der Seite, die einer vorbestimmten linken oder rechten Richtung entspricht, automatisch aufleuchtet.

12. Verfahren nach Anspruch 10, **dadurch gekennzeichnet, dass** in dem Fall einer Kurve, die in die linke oder rechte Richtung gekrümmt verläuft, die erste Lampe (20a, b) auf der Seite, die der Richtung des Kurvenverlaufs entspricht, automatisch aufleuchtet.

13. Verfahren nach einem der Ansprüche von Anspruch 9 bis 12, **dadurch gekennzeichnet, dass** sich die Beleuchtungszonen (15a, b) der zweiten Lampen (21a, b) automatisch entsprechend der Größe des Bankwinkels ($\theta$) verändern.

**14.** Verfahren nach einem der Ansprüche von Anspruch 9 bis 13, **dadurch gekennzeichnet, dass** die Größe des Bankwinkels ($\theta$) aus der Fahrzeuggeschwindigkeit (V) und den Werten der Giergeschwindigkeit (w), erhalten durch Erfassen der Fahrzeuggeschwindigkeit (V) und der Werte der Werte der Giergeschwindigkeit (w) des Fahrzeuges, automatisch erhalten wird.

**15.** Verfahren nach einem der Ansprüche 9 bis 14, **dadurch gekennzeichnet, dass** in dem Fall, dass der Bankwinkel ($\theta$) des Motorrades ein festgelegter Wert ($\theta_1$) oder kleiner wird, wenn das Motorrad ein Kurve oder Abbiegung mit der zweiten Lampe (21 a, b) aufgeleuchtet fährt, funktioniert die zweite Lampe (21 a, b) automatisch.

**16.** Verfahren nach Anspruch 15, **dadurch gekennzeichnet, dass** der festgelegte Wert ($\theta_1$) des Bankwinkels ($\theta$) für das automatische Ausschalten der zweiten Lampe (21 a, b) kleiner als der festgelegte Wert ($\theta_2$) des Bankwinkels ($\theta$) für das automatische Aufleuchten der zweiten Lampe (21 a, b) ist.

**17.** Verfahren nach einem der Ansprüche 9 bis 16, **dadurch gekennzeichnet, dass** die Beleuchtungsrichtung der ersten Lampe (20a, b) unter einer horizontalen Trennlinie (H) festgelegt ist und die Beleuchtungsrichtung der zweiten Lampe (21a, b) eine Punktbeleuchtung, festgelegt oberhalb der horizontalen Trennlinie (H), ist.

**18.** Verfahren nach einem der Ansprüche 9 bis 17, **dadurch gekennzeichnet, dass** das linke und rechte Paar zweiter Lampen (21 a, b) mit zwei oder einer Mehrzahl von LED's (30), vorgesehen jeweils in linken und rechten Positionen in dem vorderen Teil des Fahrzeuges, gebildet sind.

**19.** Verfahren nach Anspruch 18, **dadurch gekennzeichnet, dass** die Mehrzahl von LED's (30) nebeneinander in Richtung der Fahrzeugbreite in linken und rechten Positionen des vorderen Teils des Fahrzeuges (10) angeordnet ist und jeweilige LED's voreingestellt sind, um individuell in verschiedene Winkelbereiche des Bankwinkels ($\theta$) zu leuchten.

**20.** Verfahren nach einem der Ansprüche 9 bis 19, **dadurch gekennzeichnet, dass** das Motorrad außerdem mit einem Scheinwerfer (12, 40) in dem vorderen mittleren Teil des Fahrzeuges (10) versehen ist und die ersten und zweiten Lampen (21 q, b) eingestellt sind, um aufzuleuchten, wenn der Scheinwerfer (12, 40) aufleuchtet.

**21.** Fahrzeug (10), versehen mit Beleuchtungseinrichtungen (11 a, b; 20a, b; 21 a, b), die vorgesehen sind, eine erste Beleuchtungszone (14a, b) für eine linke und /oder rechte Richtung voraus des Fahrzeuges (10) zu beleuchten, und mit einer Steuerungseinrichtung (44),
**dadurch gekennzeichnet, dass** die Steuerungseinrichtung (44) konfiguriert ist, ein Ziel zu erfassen, um in eine Kurve einzufahren und / oder eine Abbiegung vorzunehmen durch Prüfen einer Aktivierung eines Abbiegesignalbetriebs und /oder einer Information aus einem Plan; und um die Beleuchtungseinrichtungen (11a, b; 20a, b; 21 a, b) zu aktivieren, um eine erste Beleuchtungszone (14a, b) für die linke und / oder rechte Richtung voraus des Fahrzeuges (10) zu beleuchten, wenn das Ziel bestätigt ist.

**22.** Fahrzeug nach Anspruch 21, **dadurch gekennzeichnet, dass** das Fahrzeug ein Motorrad ist und die Beleuchtungseinrichtungen (11a, b; 20a, b; 21 a, b) vorgesehen sind, eine zweite Beleuchtungszone (15a, b) für die jeweilige linke und / oder rechte Richtung des Motorrades zu beleuchten, wenn das Motorrad in der Kurve fährt und ein Bankwinkel ($\theta$) des Motorrades als zumindest einem festgelegten Wert entsprechend festgestellt wird.

**23.** Fahrzeug nach Anspruch 22, **gekennzeichnet durch** Lampen (11a, b; 20a, b; 21 a, b) als Beleuchtungseinrichtungen und die Steuerungseinrichtung (44) zum Steuern der Beleuchtungszonen (14a, b, 15a, b) der Lampen, wobei die Lampen gesteuert werden, um in der Lage zu sein, die erste Beleuchtungszone (14a, b) und die zweite Beleuchtungszone (15a, b) für die jeweilige linke und rechte Richtung zu beleuchten, wobei die Lampen **durch** die Steuerungseinrichtung von einem Punkt (A) vor der Kurve oder Abbiegung gesteuert werden, um automatisch aufzuleuchten und die erste Beleuchtungszone (14a, b) für die linke und rechte Richtung zu beleuchten, wenn das Motorrad dabei ist, in die Kurve oder die Abbiegung zu fahren, und gesteuert werden, um automatisch aufzuleuchten und die zweite Beleuchtungszone (15a, b) für die linke und rechte Richtung zu beleuchten, nachdem das Motorrad in die Kurve oder die Abbiegung gefahren ist, während des Fahrens der Kurve oder Abbiegung, in dem Fall, dass der Bankwinkel ($\theta$) des Motorrades ein festgelegter Wert ($\theta_1$) oder größer wird.

**24.** Fahrzeug nach Anspruch 23, **dadurch gekennzeichnet, dass** die zweiten Beleuchtungszonen (15a, b) in Scheibenlichtverteilung, wenn das Fahrzeug (10) aufrecht ist, darauf abzielen oberhalb der ersten Beleuchtungszonen (14a, b) zu sein.

**25.** Fahrzeug nach Anspruch 22, **gekennzeichnet durch** Lampen (20a, b; 21 a, b) als Beleuchtungseinrichtung und die Steuerungseinrichtung (44) zum Steuern der Beleuchtungszonen (14a, b; 15a, b) der Lampen, wobei die Lampen mit einem linken und rechten Paar von ersten Lampen (20a, b) gebildet sind und ein linkes und rechtes Paar der zweiten Lampen (21 a, b) in dem vorderen Teil des Fahrzeuges (10) vorgesehen ist,

wobei wird, die Beleuchtungszonen (15a, b) der zweiten Lampen (21 a, b) in Scheibenlichtverteilung, wenn das Fahrzeug aufrecht ist, darauf abzielen oberhalb der ersten Beleuchtungszonen (14a, b) der ersten Lampen (20a, b) zu sein, die Steuerungseinrichtung (44) vorgesehen ist, die linken und rechten Paare der ersten Lampen (20a, b) zu steuern, um automatisch die erste Lampe (20a, b) auf der Seite aufleuchten zu lassen auf der Seite, die der Richtung, angezeigt mit dem Abbiegesignal entspricht, da mit dem Betrieb eines Abbiegesignales zwangsgekoppelt und um das linke und rechte Paar der zweiten Lampen (21 a, b) derart zu steuern, dass die zweite Lampe (21 a, b) auf derselben Seite wie die Seite, auf der die erste Lampe (20a, b) aufgeleuchtet hat, automatisch aufleuchtet, wenn der Bankwinkel ($\theta$) des Motorrades ein bestimmter Wert ($\theta_1$) oder größer wird, während die erste Lampe (20a, b) aufleuchtend ist.

**26.** Fahrzeug nach Anspruch 22, **gekennzeichnet durch** die Lampen (20a, b; 21 a, b) als Beleuchtungseinrichtung, wobei die Lampen gebildet sind mit einem linken und rechten Paar von ersten Lampen (20a, b) und einem linken und rechten Paar von zweiten Lampen (21 a, b), vorgesehen in dem vorderen Teil des Fahrzeuges (10), wobei die Beleuchtungszonen (15a, b) der zweiten Lampen (21 a, b) in Scheibenlichtverteilung, wenn das Fahrzeug aufrecht ist, darauf abzielen, oberhalb der Beleuchtungszonen (14a, b) der ersten Lampen (20a, b) zu sein, die Steuerungseinrichtung (44) vorgesehen ist, das rechte und das linke Paar von ersten Lampen (20a, b) derart zu steuern, dass die Kurve oder Abbiegung automatisch aus der Planinformation erfasst wird und eines der linken oder rechten Paare der ersten Lampen (20a, b) automatisch aufleuchtet, wenn das Motorrad einen vorbestimmten Punkt (A) vor der Kurve oder der Abbiegung erreicht, und das linke und rechte Paar der zweiten Lampen (21 a, b) derart zu steuern, dass die zweite Lampe (21 a, b) auf derselben Seite wie die Seite, auf der die erste Lampe (20a, b) aufgeleuchtet hat, automatisch aufleuchtet, wenn der Bankwinkel ($\theta$) des Motorrades ein bestimmter Wert ($\theta_1$) oder größer wird, mit der ersten Lampe (20a, b) aufgeleuchtet.

**27.** Fahrzeug nach Anspruch 26, **dadurch gekennzeichnet, dass** die Steuerungseinrichtung (44) vorgesehen ist, die Lampen (20a, b; 21 a, b) so zu steuern, dass in dem Fall, dass die Kurve oder Abbiegung eine Kreuzung ist, die zumindest in zwei, eine linke und eine rechte Richtung abzweigt, die erste Lampe (20a, b) auf der Seite, die einer vorbestimmten linken oder rechten Richtung entspricht, die Lampen automatisch aufleucht.

**28.** Fahrzeug nach Anspruch 26, **dadurch gekennzeichnet, dass** die Steuerungseinrichtung (44) vorgesehen ist, die Lampen (20a, b; 21 a, b) so zu steuern, dass in dem Fall einer Kurve, die in die linke oder rechte Richtung verläuft, die erste Lampe (20a, b) auf der Seite, die der Kurvenrichtung der Kurve entspricht, automatisch aufleuchtet.

**29.** Fahrzeug nach einem der Ansprüche 25 bis 28, **dadurch gekennzeichnet, dass** sich eine Beleuchtungswinkeizone der zweiten Lampe (21 a, b) automatisch entsprechend der Größe des Bankwinkels ($\theta$) verändert.

**30.** Fahrzeug nach einem der Ansprüche 25 bis 29, **dadurch gekennzeichnet, dass** die Größe des Bankwinkels ($\theta$) automatisch erhalten wird aus der Fahrzeuggeschwindigkeit (V) und den Werten der Giergeschwindigkeit ($\omega$), erhalten durch Erfassen der Fahrzeuggeschwindigkeit (V) und den Werten der Giergeschwindigkeit (w) des Fahrzeuges.

**31.** Fahrzeug nach einem der Ansprüche 25 bis 30, **dadurch gekennzeichnet, dass** in dem Fall, dass der Bankwinkel ($\theta$) des Motorrades ein bestimmter Wert ($\theta_1$) oder kleiner wird, wenn das Fahrzeug eine Kurve oder Abbiegung mit der aufgeleuchteten zweiten Lampe (21 a, b) fährt, die zweite Lampe (21 a, b) automatisch ausgeht.

**32.** Fahrzeug nach Anspruch 31, **dadurch gekennzeichnet, dass** der bestimmte Wert ($\theta_1$) des Bankwinkels ($\theta_1$) für das automatische Ausgehen der zweiten Lampe (21 a, b) kleiner als der spezifische Wert des Bankwinkels ($\theta_1$) für das automatische Aufleuchten der zweiten Lampe (21 a, b) ist.

**33.** Fahrzeug nach einem der Ansprüche 25 bis 32, **dadurch gekennzeichnet, dass** eine Beleuchtungsrichtung der ersten Lampe (20a, b) unter eine horizontale Schnittlinie (H) festgelegt ist, die Beleuchtungsrichtung der zweiten Lampe (21 a, b) oberhalb der horizontalen Schnittlinie (H) festgelegt ist.

**34.** Fahrzeug nach einem der Ansprüche 25 bis 33, **dadurch gekennzeichnet, dass** das linke und rechte Paar der zweiten Lampen (21 a, b) mit zwei oder dem Mehrfachen von LED's (30) gebildet ist, vorgesehen jeweils in linken und rechten Positionen im vorderen Teil des Fahrzeuges (10).

**35.** Fahrzeug nach Anspruch 34, **dadurch gekennzeichnet, dass** die Vielzahl von LED's (30) nebeneinander in der Richtung der Fahrzeugbreite in linken und rechten Positionen des vorderen Teils des Fahrzeuges (10) angeordnet ist und jeweilige LED's (30) vorhanden sind, um individuell in verschiedenen Winkelbereichen des Bankwinkels ($\theta$) aufzuleuchten.

**36.** Fahrzeug nach einem der Ansprüche 25 bis 35, **dadurch gekennzeichnet, dass** das Motorrad außerdem mit einem Scheinwerfer (40) im vorderen mittleren Teil des Fahrzeuges (10) versehen ist und die ersten und zweiten Lampen (20a, b; 21 a, b) eingestellt sind, um aufzuleuchten, wenn der Scheinwerfer (40) eingeschaltet ist.

**Revendications**

**1.** Procédé de commande de moyens d'éclairage (11a,b ; 20a,b ; 21a,b) d'un véhicule (10), en particulier d'un motocycle, **caractérisé par** les étapes consistant à :

détecter un objectif d'entrer dans un virage et/ou effectuer un virage en vérifiant une activation de l'actionnement d'un clignotant et/ou une information de carte ; et
activer lesdits moyens d'éclairage (11a,b ; 20a,b ; 21a,b) pour éclairer une première zone d'éclairage (14a,b) pour des directions gauche et/ou droite à l'avant du véhicule (10) lorsque l'objectif est confirmé.

**2.** Procédé selon la revendication 1, **caractérisé en ce que** le véhicule est un motocycle, et lesdits moyens d'éclairage (11a,b ; 20a,b ; 21a,b) sont activés pour éclairer une seconde zone d'éclairage (15a, 15b) pour des directions gauche et/ou droite à l'avant du motocycle lorsqu'un angle d'inclinaison latérale ($\theta$) du motocycle s'avère être au moins une valeur fixe ($\theta_1$) pendant la conduite dans le virage ou pendant la réalisation du virage.

**3.** Procédé selon la revendication 2, **caractérisé en ce que** le motocycle est doté de lampes (11a,b ; 20a,b ; 21a,b) comme moyens d'éclairage pour éclairer des directions gauche et droite à l'avant du motocycle, lesdites lampes (11a,b ; 20a,b ; 21a,b) sont commandées pour pouvoir éclairer la première zone d'éclairage (14a,b) et la seconde zone d'éclairage (15a,b) pour des directions gauche et droite respectives, où les lampes (11a,b ; 20a,b ; 21a,b) sont commandées pour éclairer la première zone d'éclairage (14a,b), d'un point (A) avant un virage, pour la direction gauche ou droite lorsque le motocycle va entrer dans le virage, et commandées pour éclairer la seconde zone d'éclairage (15a,b) pour la direction gauche ou droite après que le motocycle est entré dans le virage, tout en conduisant dans le virage, dans le cas où l'angle d'inclinaison latérale ($\theta$) du motocycle devient une valeur spécifiée ($\theta_1$, $\theta_2$) ou supérieure.

**4.** Procédé selon la revendication 3, **caractérisé en ce que** les lampes sont constituées d'une paire de lampes gauche et droite (11a,b ; 20a,b ; 21a,b) disposée sur la partie avant du véhicule, et dans lequel les lampes gauche et droite (11a,b ; 20a,b ; 21a,b) sont chacune commandées pour être capables d'éclairer la première zone d'éclairage (14a, b) et la seconde zone d'éclairage (15a,b).

**5.** Procédé selon la revendication 3 ou 4, **caractérisé en ce que** les lampes sont automatiquement commandées pour éclairer la première zone d'éclairage (14a,b) du côté correspondant à la direction indiquée par un clignotant, enclenchées avec l'actionnement du clignotant lorsque le motocycle va entrer dans le virage, et sont automatiquement commandées pour éclairer la seconde zone d'éclairage (15a,b) du même côté que le côté éclairant la première zone d'éclairage (14a,b) après que le motocycle est entré dans le virage, tout en conduisant dans le virage, dans le cas où l'angle d'inclinaison latérale ($\theta$) du motocycle devient une valeur spécifiée ($\theta_1$) ou supérieure.

**6.** Procédé selon l'une des revendications 2 à 5, **caractérisé en ce que** les secondes zones d'éclairage (15a,b) dans la répartition de lumière d'écran, lorsque le véhicule est droit, sont orientées de sorte à être au-dessus de la première zone d'éclairage (14a,b).

**7.** Procédé selon la revendication 2, **caractérisé en ce que** les lampes sont constituées d'une paire de premières lampes gauche et droite (20a,b) et d'une paire de secondes lampes gauche et droite (21a,b) disposées dans la partie avant du véhicule, et, lorsque le motocycle va entrer dans le virage, les premières lampes (20a,b) sont commandées, à partir d'un point (A) avant le virage, pour s'allumer automatiquement et éclairer la première zone d'éclairage (14a,b) pour la direction gauche ou droite, et après que le motocycle est entré dans le virage, tout en conduisant dans le virage, dans le cas où l'angle d'inclinaison latérale ($\theta$) du motocycle devient une valeur spécifiée ($\theta_1$) ou supérieure, la seconde lampe (21a,b) est commandée pour s'allumer automatiquement et éclairer la seconde zone d'éclairage (15a,b) pour la direction gauche ou droite.

8.  Procédé selon l'une des revendications 3 à 7, **caractérisé en ce que** la lampe est commandée pour pouvoir éclairer la première et la seconde zone d'éclairage (14a,b ; 15a,b) en commandant une lentille ou un réflecteur disposé sur une source de lumière de la lampe.

9.  Procédé selon la revendication 2, **caractérisé en ce que** lorsque le motocycle prend un virage, où le motocycle est doté d'une paire de premières lampes gauche et droite (20a,b) et d'une paire de secondes lampes gauche et droite (21a,b) dans la partie avant du véhicule,
    les zones d'éclairage (15a,b) des secondes lampes (21a,b) dans la répartition de lumière d'écran, lorsque le véhicule est droit, sont orientées de sorte à être au-dessus des zones d'éclairage (14a,b) des premières lampes (20a,b), et lorsque le motocycle va entrer dans le virage, la première lampe (20a,b) du côté correspondant à la direction indiquée par un clignotant s'allume automatiquement, enclenchées avec l'actionnement du clignotant, et après que le motocycle est entré dans le virage, tout en conduisant dans le virage, dans le cas où l'angle d'inclinaison latérale ($\theta$) du motocycle devient une valeur spécifiée ($\theta_1$) ou supérieure, la seconde lampe (21a,b) du même côté que le côté duquel la première lampe (20a,b) s'est allumée s'allume automatiquement.

10. Procédé selon la revendication 2, **caractérisé en ce que** lorsque le motocycle prend un virage, où le motocycle est doté d'une paire de premières lampes gauche et droite (20a,b) et d'une paire de secondes lampes gauche et droite (21a,b) dans la partie avant du véhicule,
    les zones d'éclairage (15a,b) des secondes lampes (21a,b) dans la répartition de lumière d'écran, lorsque le véhicule est droit, sont orientées de sorte à être au-dessus des zones d'éclairage (14a,b) des premières lampes (20a,b), et lorsque le motocycle va entrer dans un virage, le virage est automatiquement détecté à partir des informations de carte, et lorsque le motocycle atteint un point (A) prédéterminé avant le virage, l'une des lampes de la paire de premières lampes (20a,b) s'allume automatiquement, et
    après que le motocycle est entré dans le virage, tout en conduisant dans le virage, dans le cas où l'angle d'inclinaison latérale ($\theta$) du motocycle devient une valeur spécifiée ($\theta_1$) ou supérieure, la seconde lampe (21a,b) du même côté que le côté duquel la première lampe (20a,b) s'est allumée s'allume automatiquement.

11. Procédé selon la revendication 10, **caractérisé en ce que** dans le cas où le virage est une intersection reliant au moins deux directions gauche et droite, la première lampe (20a,b) du côté correspondant à une direction gauche et droite prédéterminée s'allume automatiquement.

12. Procédé selon la revendication 10, **caractérisé en ce que** dans le cas d'un virage se courbant dans la direction gauche ou droite, la première lampe (20a,b) du côté correspondant à la direction de courbure du virage s'allume automatiquement.

13. Procédé selon l'une des revendications 9 à 12, **caractérisé en ce que** les zones d'éclairage (15a,b) des secondes lampes (21a,b) changent automatiquement en fonction de la grandeur de l'angle d'inclinaison latérale ($\theta$).

14. Procédé selon l'une des revendications 9 à 13, **caractérisé en ce que** la grandeur de l'angle d'inclinaison latérale ($\theta$) est automatiquement obtenue à partir des valeurs de vitesse de véhicule (V) et d'amplitude du mouvement de lacet ($\omega$) du véhicule.

15. Procédé selon l'une des revendications 9 à 14, **caractérisé en ce que** dans le cas où l'angle d'inclinaison latérale ($\theta$) du motocycle devient une valeur spécifiée ($\theta_1$) ou inférieure, lorsque le motocycle conduit dans le virage avec la seconde lampe (21a,b) allumée, la seconde lampe (21a,b) s'éteint automatiquement.

16. Procédé selon la revendication 15, **caractérisé en ce que** la valeur spécifiée ($\theta_1$) de l'angle d'inclinaison latérale ($\theta$) pour éteindre automatiquement la seconde lampe (21a,b) est inférieure à la valeur spécifiée ($\theta_2$) de l'angle d'inclinaison latérale ($\theta_1$) pour allumer automatiquement la seconde lampe (21a,b).

17. Procédé selon l'une des revendications 9 à 16, **caractérisé en ce que** la direction d'éclairage de la première lampe (20a,b) est réglée en dessous d'une ligne de coupe horizontale (H) et la direction d'éclairage de la seconde lampe (21a,b) est réglée en éclairage de position au-dessus de la ligne de coupe horizontale (H).

**18.** Procédé selon l'une des revendications 9 à 17, **caractérisé en ce que** la paire de secondes lampes gauche et droite (21a,b) est constituée de deux pluralités de DEL ou plus (30) disposées respectivement dans les positions gauche et droite dans la partie avant du véhicule.

**19.** Procédé selon la revendication 18, **caractérisé en ce que** la pluralité de DEL (30) est disposée côte à côte dans la direction de largeur du véhicule dans des positions gauche et droite de la partie avant du véhicule (10), et des DEL respectives sont préréglées pour s'allumer individuellement dans des plages angulaires différentes de l'angle d'inclinaison latérale ($\theta$).

**20.** Procédé selon l'une des revendications 9 à 19, **caractérisé en ce que** le motocycle est en outre doté d'un phare (12, 40) dans la partie centrale avant du véhicule (10), et les première et seconde lampes (21a,b) sont ajustées pour s'allumer lorsque le phare (12, 40) est allumé.

**21.** véhicule (10) doté de moyens d'éclairage (11a,b ; 20a,b ; 21a,b) adaptés pour éclairer une première zone d'éclairage (14a,b) pour des directions gauche et/ou droite à l'avant du véhicule (10), et de moyens de commande (44), **caractérisé en ce que** les moyens de commande (44) sont configurés pour détecter un objectif pour entrer dans un virage et/ou prendre un virage en vérifiant une activation d'un actionnement de clignotant et/ou d'informations de carte ; et pour activer lesdits moyens d'éclairage (11a,b ; 20a,b ; 21a,b) pour éclairer une première zone d'éclairage (14a,b) pour des directions gauche et/ou droite à l'avant du véhicule (10) lorsque l'objectif est confirmé.

**22.** Véhicule selon la revendication 21, **caractérisé en ce que** le véhicule est un motocycle, et les moyens d'éclairage (11a,b ; 20a,b ; 21a,b) sont adaptés pour éclairer une seconde zone d'éclairage (15a, 15b) pour des directions gauche et/ou droite respectives du motocycle lorsque le motocycle conduit dans un virage et un angle d'inclinaison latérale ($\theta$) du motocycle s'avère être d'au moins une valeur fixe.

**23.** véhicule selon la revendication 22, **caractérisé par** des lampes (11a,b ; 20a,b ; 21a,b) comme moyens d'éclairage et les moyens de commande (44) pour commander les zones d'éclairage (14a,b ; 15a,b) des lampes, où les lampes sont commandées pour pouvoir éclairer la première zone d'éclairage (14a,b) et la seconde zone d'éclairage (15a, b) pour des directions gauche et droite respectives, et où les lampes sont commandées par les moyens de commande, à partir d'un point (A) avant le virage, pour s'allumer automatiquement et éclairer la première zone d'éclairage (14a, b) pour la direction gauche et droite lorsque le motocycle va entrer dans le virage, et commandées pour s'allumer automatiquement et éclairer la seconde zone d'éclairage (15a,b) pour la direction gauche ou droite après que le motocycle est entré dans le virage, tout en conduisant dans le virage, dans le cas où l'angle d'inclinaison latérale ($\theta$) du motocycle devient une valeur spécifiée ($\theta_1$) ou supérieure.

**24.** Véhicule selon la revendication 23, **caractérisé en ce que** les secondes zones d'éclairage (15a,b) dans la répartition de lumière d'écran, lorsque le véhicule (10) est droit, sont orientées de sorte à être au-dessus de la première zone d'éclairage (14a,b).

**25.** Véhicule selon la revendication 22, **caractérisé par** des lampes (20a,b ; 21a,b) comme moyens d'éclairage et les moyens de commande (44) pour commander les zones d'éclairage (14a,b ; 15a,b) des lampes, où les lampes sont constituées d'une paire de premières lampes gauche et droite (20a,b) et d'une paire de secondes lampes gauche et droite (21a,b) disposées dans la partie avant du véhicule (10), les zones d'éclairage (15a,b) des secondes lampes (21a,b) dans la répartition de lumière d'écran, lorsque le véhicule est droit, sont orientées de sorte à être au-dessus des zones d'éclairage (14a,b) des premières lampes (20a,b), les moyens de commande (44) sont adaptés pour commander la paire de premières lampes gauche et droite (20a, b) pour allumer automatiquement la première lampe (20a,b) du côté correspondant à la direction indiquée par le clignotant, enclenchée avec l'actionnement d'un clignotant, et pour commander la paire de secondes lampes gauche et droite (21a,b) de telle sorte que la seconde lampe (21a,b) du même côté que le côté duquel la première lampe (20a,b) s'est allumée s'allume automatiquement lorsque l'angle d'inclinaison latérale ($\theta$) du motocycle devient une valeur spécifiée ($\theta_1$) ou supérieure lorsque la première lampe (20a,b) est allumée.

**26.** Véhicule selon la revendication 22, **caractérisé par** des lampes (20a,b ; 21a,b) comme moyens d'éclairage, où les lampes sont constituées d'une paire de premières lampes gauche et droite (20a,b) et d'une paire de secondes lampes gauche et droite (21a,b) disposées dans la partie avant du véhicule (10), les zones d'éclairage (15a,b) des secondes lampes (21a,b) dans la répartition de lumière d'écran, lorsque le véhicule est droit, sont orientées de sorte à être au-dessus des zones d'éclairage (14a,b) des premières lampes (20a,b), les moyens de commande (44) sont adaptés pour commander la paire de premières lampes gauche et droite (20a,b) de telle sorte que le virage soit automatiquement détecté à partir des informations de carte et l'une des lampes de la paire de premières lampes gauche et droite (20a,b) s'allume automatiquement lorsque le motocycle atteint un point prédéterminé (A) avant le virage, et pour commander la paire gauche et droite de secondes lampes (21a, b) de telle sorte que la seconde lampe (21a,b), du même côté que le côté où la première lampe (20a,b) s'est allumée, soit allumée automatiquement lorsque l'angle d'inclinaison latérale ($\theta$) du motocycle devient une valeur spécifiée ($\theta_1$) ou supérieure lorsque la première lampe (20a,b) s'allume.

27. Véhicule selon la revendication 26, **caractérisé en ce que** les moyens de commande (44) sont adaptés pour commander les lampes (20a,b ; 21a,b) de sorte que, dans le cas où le virage est une intersection reliant au moins deux directions gauche et droite, la première lampe (20a,b) du côté correspondant à une direction gauche ou droite prédéterminée s'allume automatiquement.

28. Véhicule selon la revendication 26, **caractérisé en ce que** les moyens de commande (44) sont adaptés pour commander les lampes (20a,b ; 21a,b) de sorte que, dans le cas d'un virage tournant dans la direction gauche ou droite, la première lampe (20a,b) du côté correspondant à la direction de courbure du virage s'allume automatiquement.

29. véhicule selon l'une des revendications 25 à 28, **caractérisé en ce qu'**une zone d'angle d'éclairage de la seconde lampe (21a,b) change automatiquement en fonction de la grandeur de l'angle d'inclinaison latérale ($\theta$).

30. véhicule selon l'une des revendications 25 à 29, **caractérisé en ce que** la grandeur de l'angle d'inclinaison latérale ($\theta$) est automatiquement obtenue à partir des valeurs de vitesse de véhicule (V) et d'amplitude du mouvement de lacet ($\omega$) obtenues par détection des valeurs de vitesse de véhicule (V) et d'amplitude du mouvement de lacet ($\omega$) du véhicule.

31. Véhicule selon l'une des revendications 25 à 30, **caractérisé en ce que** dans le cas où l'angle d'inclinaison latérale ($\theta$) du motocycle devient une valeur spécifiée ($\theta_1$) ou inférieure, lorsque le motocycle conduit dans un virage avec la seconde lampe (21a,b) allumée, la seconde lampe (21a,b) s'éteint automatiquement.

32. Véhicule selon la revendication 31, **caractérisé en ce que** la valeur spécifiée de l'angle d'inclinaison latérale ($\theta_1$) pour éteindre automatiquement la seconde lampe (21a,b) est inférieure à la valeur spécifiée de l'angle d'inclinaison latérale ($\theta_2$) pour allumer automatiquement la seconde lampe (21a,b).

33. Véhicule selon l'une des revendications 25 à 32, **caractérisé en ce qu'**une direction d'éclairage de la première lampe (20a,b) est réglée en dessous d'une ligne de coupe horizontale (H), la direction d'éclairage de la seconde lampe (21a,b) est réglée au-dessus de la ligne de coupe horizontale (H).

34. véhicule selon l'une des revendications 25 à 33, **caractérisé en ce que** la paire de secondes lampes gauche et droite (21a,b) est constituée de deux pluralités de DEL (30) disposées respectivement dans les positions gauche et droite dans la partie avant du véhicule (10).

35. Véhicule selon la revendication 34, **caractérisé en ce que** les pluralités de DEL (30) sont disposées côte à côte dans la direction de largeur du véhicule dans des positions gauche et droite de la partie avant du véhicule (10), et des DEL respectives (30) sont préréglées pour s'allumer individuellement dans différentes plages angulaires de l'angle d'inclinaison latérale ($\theta$).

36. Véhicule selon l'une des revendications 25 à 35, **caractérisé en ce que** le motocycle est en outre doté d'un phare (40) dans la partie centrale avant du véhicule (10), et les première et seconde lampes (20a,b ; 21a,b) sont ajustées pour s'allumer lorsque le phare (40) est allumé.

FIG. 1

V

15b                    13        15a

H

14b                    14a

FIG. 2

FIG. 3

FIG. 4

(a)

B

A →

10

(b)

D

C

10

# FIG. 5

FIG. 6

(a)

20a

22

20b

21a

21b

(b)

22

20b

21b

FIG. 7

START

S1 — Is turn signal switch ON? —— NO

YES

S2 — Right or left? —— Left

Right

S3 Right 1st light ON.

S4 Left 1st light ON.

S5 — Is bank angle $\theta \geq \theta 1$? 

NO

YES

S7 — Is bank angle $\theta \geq \theta 2$? —— NO

YES

S6 Right 2nd light ON.

S8 Right 2nd light ON.

FIG. 8

START

S1 — Is turn signal switch ON? — NO

YES

S2 — Right or left? — Left

Right

S3 — Right 1st light ON.

S4 — Is right 2nd light ON? — YES

NO

S5 — Is bank angle θ ≥ θ1? — NO

S7 — Is bank angle θ < θ2? — NO

YES

YES

S6 — Right 2nd light ON.

S8 — Right 2nd light OFF.

FIG. 9

31

FIG. 10

FIG. 11

$\theta$

10

$\theta$

Mg tan $\theta$

$M \dfrac{V^2}{R}$

Mg

(a)

(b)

FIG. 12

```
                                            40

     41                          44              ┌──────────────┐
  ┌──────────────┐                              │ Right 1st    │  ~ 20a
  │ Turn signal  │           ┌──────────────┐   │ light        │
  │ switch       │───────────│              │───└──────────────┘
  └──────────────┘           │              │   ┌──────────────┐
     42                      │ Control means│───│ Right 2nd    │  ~ 20b
  ┌──────────────┐           │              │   │ light        │
  │ Yaw rate     │───────────│              │   └──────────────┘
  │ sensor       │           │              │   ┌──────────────┐
  └──────────────┘           │              │───│ Left 1st     │  ~ 21a
     43                      │              │   │ light        │
  ┌──────────────┐           └──────────────┘   └──────────────┘
  │ Vehicle      │                              ┌──────────────┐
  │ speed        │──────────────────────────────│ Left 2nd     │  ~ 21b
  │ sensor       │                              │ light        │
  └──────────────┘                              └──────────────┘
```

FIG. 13

FIG. 14

L $_2$

100

FIG. 15

(a)

110

H

(b)

110

H

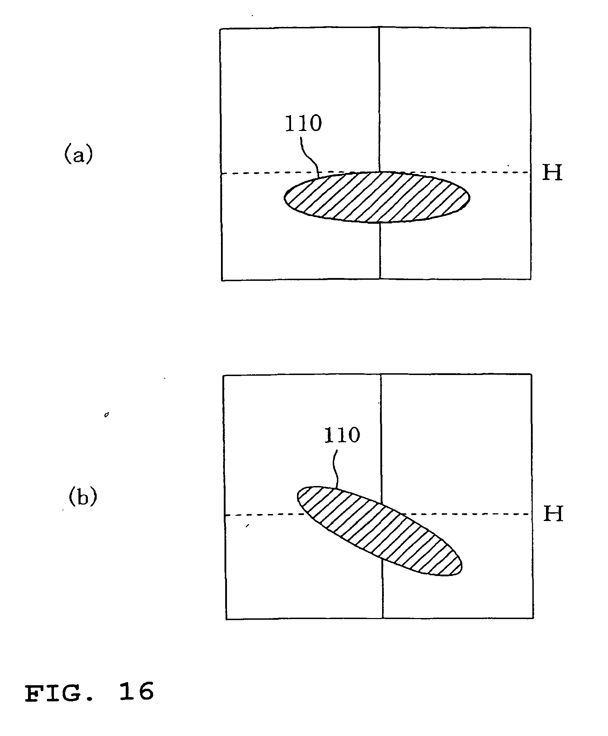

FIG. 16

a

b

10

FIG. 17

FIG. 18

FIG. 19

**EP 1 645 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001219881 A
- JP 2001347977 A
- US 5161875 A